# EUROPÄISCHE PATENTSCHRIFT

(11) **EP 3 696 462 B1**
(45) Veröffentlichungstag und Bekanntmachung des Hinweises auf die Patenterteilung: **11.08.2021**
(21) Anmeldenummer: 20157791.3
(22) Anmeldetag: 17.02.2020
(51) Int. Cl.: F23G 5/50, F23N 3/00, F23N 5/00, G06N 3/063, G06N 3/08

(54) **VERFAHREN ZUM STEUERN EINES KESSELS EINER MÜLLVERBRENNUNGSANLAGE DURCH EIN TRAINIERTES NEURONALES NETZ UND VERFAHREN ZUM TRAINIEREN EINES NEURONALEN NETZES ZUM STEUERN EINES KESSELS EINER MÜLLVERBRENNUNGSANLAGE**
METHOD FOR CONTROLLING A BOILER OF A REFUSE INCINERATION PLANT BY MEANS OF A TRAINED NEURAL NETWORK AND METHOD FOR TRAINING A NEURAL NETWORK FOR CONTROLLING A BOILER OF A REFUSE INCINERATION PLANT
PROCÉDÉ DE COMMANDE D'UNE CHAUDIÈRE D'UNE INSTALLATION D'INCINÉRATION DES DÉCHETS À L'AIDE D'UN RÉSEAU DE NEURONES APPRIS, ET PROCÉDÉ D'APPRENTISSAGE D'UN RÉSEAU DE NEURONES POUR COMMANDER UNE CHAUDIÈRE D'UNE INSTALLATION D'INCINÉRATION DES DÉCHETS

(30) Priorität: 17.02.2019 DE 202019000735 U
(43) Veröffentlichungstag der Anmeldung: 19.08.2020
(73) Patentinhaber: Uniper Technologies GmbH, 45896 Gelsenkirchen (DE)
(72) Erfinder: Gebhardt, Frank, 45721 Haltern am See (DE)
(74) Vertreter: Ter Meer Steinmeister & Partner

(56) Entgegenhaltungen:
- EP-A1- 1 890 207
- DE-U1-202017 006 632
- JP-A- H 116 607

## Beschreibung

### Technisches Gebiet der Erfindung

Die Erfindung betrifft ein Verfahren zum Steuern eines Kessels einer Müllverbrennungsanlage durch ein trainiertes neuronales Netz. Die Erfindung betrifft ferner ein Verfahren zum Trainieren eines neuronalen Netzes zum Steuern eines Kessels einer Müllverbrennungsanlage.

### Technischer Hintergrund der Erfindung

Für die Steuerung und Regelung von physikalischen Systemen, wie beispielsweise einer komplexen Anlage, kann ein Systemmodell basierend auf mathematischen Differentialgleichungen zur Abbildung physikalischer Gesetzmäßigkeiten zugrunde gelegt werden. Mit so einem Systemmodell können Steuer- und Regelstrukturen mit Zustandsreglern entworfen werden. Dies ist jedoch nur bis zu einer gewissen Komplexität eines Systems möglich und erfordert gemeinhin großen Aufwand für die Systemcharakterisierung. Deshalb gibt es in der Betriebsführung von Anlagen verschiedene Bereiche, die bislang nur durch menschliches Bedienpersonal gesteuert werden können.

Bei Müllverbrennungsanlagen ist ein guter, möglichst rückstandsloser und schadstofffreier Ausbrand des Mülls sowie ein hoher Wirkungsgrad zur thermischen Energiegewinnung wichtig. Um dies zu erreichen, werden Kessel von Müllverbrennungsanlagen herkömmlicherweise durch menschliches Bedienpersonal beobachtet und gesteuert. Dieses Steuern ist jedoch kostenintensiv und durch menschliches Versagen fehleranfällig.

In EP 1 890 207 A1 wird ein Verfahren zum Erstellen eines Prozessmodells für die Regelung eines Verbrennungsprozesses beschrieben. Dabei wird in einem ersten Schritt ein neuronales Netz angesetzt. In -einem zweiten Schritt wird das neuronale Netz mit Messdaten der Zustandsvariablen, welche Messdaten von Eingangskanälen und Messdaten wenigstens eines Ausgangskanals umfassen, trainiert. In einem dritten Schritt wird das neuronale Netz mit weiteren Messdaten der Eingangskanäle und Messdaten des Ausgangskanals getestet, wobei aus den Abweichungen der prognostizierten Werte des Ausgangskanals von den Messdaten des Ausgangskanals eine prognostizierte Standardabweichung ermittelt wird. In einem vierten Schritt werden die Messdaten wenigstens eines Eingangskanals ersetzt durch eine Verteilung und in einem fünften Schritt werden mit der Verteilung oder Anteilen derselben erneut Werte des Ausgangskanals berechnet und eine Standardabweichung der berechneten Werte des Ausgangskanals von den zugehörigen Messdaten ermittelt.

In DE 20 2017 006632 U1 wird ein erfolgreiches Erlernen eines Systemverhaltens der Verbrennung einer Müllverbrennungsanlage unter Verwendung von Messpunkten einer Netzwerkstruktur beschrieben.

Um eine Messung der Durchflussrate der Verbrennungsluft in einem Luftkasten unter einem Feuerrost ohne Durchflussmesser zu ermöglichen, schlägt JP H11 6607 A vor, die Durchflussrate der Verbrennungsluft eines Feuerrostes in einer Müllverbrennungsanlage abzuschätzen. Eine Verbrennungsluft-Durchflussmenge, wird auf der Grundlage von mindestens einer Messung der Verbrennungsluftmengen und der Messung der Klappenöffnungen von Klappen zur Regulierung zugeführter Verbrennungsluft bestimmt.

### Zusammenfassung der Erfindung

Eine Aufgabe der vorliegenden Erfindung ist es, ein Verfahren zum Steuern eines Kessels einer Müllverbrennungsanlage durch ein trainiertes neuronales Netz, sowie ein Verfahren zum Trainieren bzw. Anlernen eines neuronalen Netzes für das Steuern eines Kessels einer Müllverbrennungsanlage anzugeben, wodurch eine automatisierte bzw. quasi automatisierte Steuerung eines Kessels einer Müllverbrennungsanlage ermöglicht wird.

Die vorliegende Erfindung gibt ein Verfahren zum Steuern eines Kessels einer Müllverbrennungsanlage durch ein trainiertes bzw. angelerntes neuronales Netz an, umfassend: Eingeben von Eingabedaten in das trainierte neuronale Netz, wobei die Eingabedaten auf Parametern basieren, die zumindest einen Kesseltrommeldruck, eine Feuerraumtemperatur, einen Parameter eines Müllaufgabesystems, einen Parameter eines Verbrennungsluftkanalsystems, einen Parameter eines Rauchgasabführungskanalsystems, und einen Parameter eines Frischdampfleitungssystems umfassen; und Berechnen und Ausgeben von Ausgabedaten durch das neuronale Netz, wobei die Ausgabedaten zumindest Steuerdaten für mindestens ein Steuerelement, das mindestens eine Luftklappe des Verbrennungsluftkanalsystems enthält, umfassen. Die Ausgabedaten können entweder einem Bediener zum Steuern des Kessels angezeigt, oder an eine Steuereinheit des Kessels geleitet werden. Die Steuereinheit des Kessels kann die Steuerelemente basierend auf den Ausgabedaten entsprechend ansteuern. Das trainierte neuronale Netz kann ein durch ein Verfahren gemäß einer der unten beschriebenen Ausführungsformen trainiertes neuronales Netz sein.

Die vorliegende Offenbarung gibt ein Verfahren zum Trainieren bzw. Anlernen eines neuronalen Netzes für das Steuern eines Kessels einer Müllverbrennungsanlage an, umfassend: Eingeben von Eingabedaten in das neuronale Netz, wobei die Eingabedaten auf Parametern basieren, die zumindest einen Kesseltrommeldruck, eine Feuerraumtemperatur, einen Parameter eines Müllaufgabesystems, einen Parameter eines Verbrennungsluftkanalsystems, einen Parameter eines Rauchgasabführungskanalsystems, und einen Parameter eines Frischdampfleitungssystems umfassen; Eingeben von Ausgabedaten in das neuronale Netz, wobei die Ausgabedaten zumindest Steuerdaten für mindestens ein Steuerelement, das mindestens eine Luftklappe des Verbrennungsluftkanalsystems enthält, umfassen; und Anlernen des neuronalen Netzes basierend auf den Eingabedaten und den Ausgabedaten. Die vorliegende Offenbarung gibt ferner eine Verwendung des trainierten neuronalen Netzes zum Steuern des Kessels der Müllverbrennungsanlage an. Der Schritt des Anlernens kann umfassen: Berechnen von berechneten Ausgabedaten basierend auf den Eingabedaten, und Vergleichen der berechneten Ausgabedaten mit den eingegebenen Ausgabedaten.

Die Eingabedaten können einen Zustandsvektor für jeden Parameter umfassen. Der Zustandsvektor umfasst mehrere Zustandsgrößen des Parameters, beispielsweise mindestens eines von einem Parameterwert, einem Gradienten zu dem Parameterwert, einer Änderung des Gradienten zu dem Parameterwert, einem Mittelwert über zwei oder mehr aufeinanderfolgende Parameterwerte, einem Mittelwert über Gradienten zu zwei oder mehr aufeinanderfolgenden Parameterwerten, einem Mittelwert über Änderungen der Gradienten zu zwei oder mehr aufeinanderfolgenden Parameterwerten, einem um eine vorgegebene Totzeit vorausgegangenen Parameterwert, einem Gradienten zu dem vorausgegangenen Parameterwert, und einer Änderung des Gradienten zu dem vorausgegangenen Parameterwert. Die Berücksichtigung vorausgegangener Parameterwerte kann mit herkömmlichen Steuermethoden nicht realisiert werden und ermöglicht eine besonders präzise und schnelle Steuerung. Vorzugsweise sind die Zustandsvektoren aller Parameter gleich lang, d.h. bestehen aus den gleichen Zustandsgrößen. Der Zustandsvektor eines Parameters kann beispielsweise mindestens drei der folgenden Zustandsgrößen des Parameters, vorzugsweise alle 21 der folgenden Zustandsgrößen, umfassen:
- einen ersten Parameterwert PW1, d.h. zu einem ersten Zeitpunkt,
- Differenzbetrag zwischen dem ersten Parameterwert und einem zweiten Parameterwert PW2, d.h. einem Parameterwert an einem zweiten Zeitpunkt (mit einem vorgegebenen Intervall zum ersten Zeitpunkt, |PW1-PW2| ("Gradient zum ersten Parameterwert"),
- Differenzbetrag von dem Differenzbetrag zwischen dem ersten Parameterwert und dem zweiten Parameterwert und von dem Differenzbetrag zwischen dem zweiten Parameterwert und einem dritten Parameterwert, | |PW1-PW2| - |PW2-PW3| | ("Änderung Gradient zum ersten Parameterwert"),
- Mittelwert über zwei Parameterwerte bzw. Mittelwert des ersten und zweiten Parameterwerts, d.h. Mittelwert (PW1, PW2),
- Mittelwert über vier Parameterwerte bzw. Mittelwert des ersten, zweiten, dritten und eines vierten Parameterwerts, d.h. Mittelwert (PW1, PW2, PW3, PW4),
- Mittelwert über acht Parameterwerte, d.h. Mittelwert (PW1, ..., PW8),
- Mittelwert über sechzehn Parameterwerte, d.h. Mittelwert (PW1, ..., PW16),
- Mittelwert über den Gradienten zum ersten Parameterwert und den Gradienten zum zweiten Parameterwert bzw. Mittelwert über die Differenzbeträge zwischen drei aufeinander folgenden Parameterwerten bzw. Mittelwert über die Differenzbeträge zwischen dem ersten Parameterwert und dem zweiten Parameterwert und zwischen dem zweiten Parameterwert und dem dritten Parameterwert, d.h. Mittelwert (|PW1-PW2|, |PW2-PW3|),
- Mittelwert über die Gradienten zu den ersten bis vierten Parameterwerten bzw. Mittelwert über die Differenzbeträge zwischen fünf aufeinander folgenden Parameterwerten bzw. Mittelwert über den Differenzbetrag zwischen dem ersten Parameterwert und dem zweiten Parameterwert und den Differenzbetrag zwischen dem zweiten Parameterwert und dem dritten Parameterwert und den Differenzbetrag zwischen dem dritten Parameterwert und dem vierten Parameterwert und den Differenzbetrag zwischen dem vierten Parameterwert und dem fünften Parameterwert, d.h. Mittelwert (|PW1-PW2|, |PW2-PW3|,|PW3-PW4|, |PW4-PW5|),
- Mittelwert über die Gradienten zu den ersten bis achten Parameterwerten bzw. Mittelwert über die Differenzbeträge zwischen neun aufeinander folgenden Parameterwerten bzw. Mittelwert über den Differenzbetrag zwischen dem ersten Parameterwert und dem zweiten Parameterwert und den Differenzbetrag zwischen dem zweiten Parameterwert und dem dritten Parameterwert und den Differenzbetrag zwischen dem dritten Parameterwert und dem vierten Parameterwert und den Differenzbetrag zwischen dem vierten Parameterwert und dem fünften Parameterwert und den Differenzbetrag zwischen dem fünften Parameterwert und dem sechsten Parameterwert und den Differenzbetrag zwischen dem sechsten Parameterwert und dem siebten Parameterwert und den Differenzbetrag zwischen dem siebten Parameterwert und dem achten Parameterwert und den Differenzbetrag zwischen dem achten Parameterwert und dem neunten Parameterwert, d.h. Mittelwert (|PW1-PW2|, |PW2-PW3|,|PW3-PW4|, ..., |PW8-PW9|),
- Mittelwert über die Änderung des Gradienten zum ersten Parameterwert und über die Änderung des Gradienten zum zweiten Parameterwert bzw. Mittelwert über den Differenzbetrag von dem Differenzbetrag zwischen dem ersten Parameterwert und dem zweiten Parameterwert und von dem Differenzbetrag zwischen dem zweiten Parameterwert und dem dritten Parameterwert, und über den Differenzbetrag von dem Differenzbetrag zwischen dem zweiten Parameterwert und dem dritten Parameterwert und von dem Differenzbetrag zwischen dem dritten Parameterwert und dem vierten Parameterwert, d.h. Mittelwert (| |PW1-PW2| - |PW2-PW3| |, | |PW2-PW3| - |PW3-PW4| |),
- Mittelwert über die Änderung des Gradienten zum ersten Parameterwert, über die Änderung des Gradienten zum zweiten Parameterwert, über die Änderung des Gradienten zum dritten Parameterwert und über die Änderung des Gradienten zum vierten Parameterwert bzw. Mittelwert über den Differenzbetrag von dem Differenzbetrag zwischen dem ersten Parameterwert und dem zweiten Parameterwert und von dem Differenzbetrag zwischen dem zweiten Parameterwert und dem dritten Parameterwert, über den Differenzbetrag von dem Differenzbetrag zwischen dem zweiten Parameterwert und dem dritten Parameterwert und von dem Differenzbetrag zwischen dem dritten Parameterwert und dem vierten Parameterwert, und über den Differenzbetrag von dem Differenzbetrag zwischen dem dritten Parameterwert und dem vierten Parameterwert und von dem Differenzbetrag zwischen dem vierten Parameterwert und dem fünften Parameterwert, und über den Differenzbetrag von dem Differenzbetrag zwischen dem vierten Parameterwert und dem fünften Parameterwert und von dem Differenzbetrag zwischen dem fünften Parameterwert und dem sechsten Parameterwert, d.h. Mittelwert von (||PW1-PW2| - |PW2-PW3||, ||PW2-PW3| - |PW3-PW4|| ||PW3-PW4| - |PW4-PW5||, ||PW4-PW5| - |PW5-PW6||),
- Mittelwert über die Änderung des Gradienten zum ersten Parameterwert, über die Änderung des Gradienten zum zweiten Parameterwert, über die Änderung des Gradienten zum dritten Parameterwert, über die Änderung des Gradienten zum vierten Parameterwert, über die Änderung des Gradienten zum fünften Parameterwert, über die Änderung des Gradienten zum sechsten Parameterwert, über die Änderung des Gradienten zum siebten Parameterwert, und über die Änderung des Gradienten zum achten Parameterwert, d.h. Mittelwert von (| |PW1-PW2| - |PW2-PW3| |, | |PW2-PW3| - |PW3-PW4| | | |PW3-PW4| - |PW4-PW5| |, | |PW4-PW5| - |PW5-PW6| | | |PW5-PW6| - |PW6-PW7| |, | |PW6-PW7| - |PW7-PW8| |, | |PW7-PW8| - |PW8-PW9| |, | |PW8-PW9| - |PW9-PW10| |),
- Parameterwert zu Totzeit 1, d.h. Parameterwert, der um Totzeit 1 zurückliegt; wenn Totzeit 1 beispielsweise dem vorgegebenen Intervall zwischen zwei aufeinanderfolgenden Parameterwerten entspricht, z.B. 5 Minuten, dann: zweiter Parameterwert PW2,
- Gradient zum Parameterwert zu Totzeit 1 bzw. Gradient zum zweiten Parameterwert |PW2-PW3,
- Änderung des Gradienten zum Parameterwert zu Totzeit 1 bzw. Änderung des Gradienten zum zweiten Parameterwert | |PW2-PW3| - |PW3-PW4| |,
- Parameterwert zu Totzeit 3 (Totzeit 3 entspricht vorzugsweise drei Intervallen, z.B. 15 Minuten) bzw. vierter Parameterwert PW4,
- Gradient zum Parameterwert zu Totzeit 3 bzw. Gradient zum vierten Parameterwert |PW4-PW5|,
- Änderung des Gradienten zum Parameterwert zu Totzeit 3 bzw. Änderung des Gradienten zum vierten Parameterwert | |PW4-PW5| - |PW5-PW6| |,
- Parameterwert zu Totzeit 5 (Totzeit 5 entspricht vorzugsweise fünf Intervallen, z.B. 25 Minuten) bzw. sechster Parameterwert PW6,
- Gradient zum Parameterwert zu Totzeit 5 bzw. Gradient zum sechsten Parameterwert |PW6-PW71.

Die sechzehn Parameterwerte sind vorzugsweise mit einem konstanten, vorgegebenen Intervall aufeinanderfolgend. Hierbei ist zu beachten, dass die sechzehn Parameterwerte zeitlich rückwärts gezählt sind, d.h. die zeitliche Reihenfolge ist PW16, PW15, ..., PW1. In einem Beispiel, in dem das Intervall zwischen zwei aufeinanderfolgenden Parameterwerten fünf Minuten beträgt, berücksichtigt der Zustandsvektor Parameterwerte über sechzehnmal 5 Minuten, also 80 Minuten. Ein weiterer Zustandsvektor des Parameters kann nach dem Prinzip des "sliding-window" bestimmt werden, d.h. die Parameterwerte zwei bis sechzehn werden wiederverwendet als Parameterwerte eins bis fünfzehn, zusätzlich zu einer neuen Messung für den neuen sechzehnten Parameterwert. Somit kann jeweils nach Ablauf eines Zeitintervalls (z.B. 5 Minuten) ein Zustandsvektor eines Parameters für die Eingabedaten bestimmt werden. Da der Zustandsvektor Zustandsgrößen, deren Ableitungen und Kumulationen sowie zeitlich zurückliegende Parameterwerte (Parameterwert zu Totzeit x) berücksichtigt, ist eine genaue und (quasi-)kontinuierliche Steuerung möglich.

Wenn der Parameter eine Messgröße ist, z.B. Druck, Temperatur, Durchflussmenge, Staudruck, Sauerstoff- oder Kohlenstoffmonoxid-Gehalt bzw. -Konzentration, etc. ist, kann der Parameterwert als Messwert (zu einem bestimmten Zeitpunkt) bezeichnet werden. Ein Messwert kann ein einzelner Messwert oder ein aus mehreren Messwerten berechneter Wert, etwa ein Mittelwert aus mehreren Messwerten, sein. Wenn der Parameter eine Vorgabe für eine Steuerung oder einen Regler umfasst, dann kann der Parameterwert als Vorgabewert (zu einem bestimmten Zeitpunkt) bezeichnet werden.

Beim Trainieren können die Ausgabedaten einen Zustandsvektor der Steuerdaten für jedes Steuerelement umfassen. Der Zustandsvektor der Steuerdaten für ein Steuerelement umfasst mehrere Zustandsgrößen der Steuerdaten eines Steuerelements, beispielsweise mindestens eines von einem Steuerwert, einem Gradienten zu dem Steuerwert, einer Änderung des Gradienten zu dem Steuerwert, einem Mittelwert über zwei oder mehr aufeinanderfolgende Steuerwerte, einem Mittelwert über Gradienten zu zwei oder mehr aufeinanderfolgenden Steuerwerten, einem Mittelwert über Änderungen der Gradienten zu zwei oder mehr aufeinanderfolgenden Steuerwerten, einem um eine vorgegebene Totzeit vorausgegangenen Steuerwert, einem Gradienten zu dem vorausgegangenen Steuerwert, und einer Änderung des Gradienten zu dem vorausgegangenen Steuerwert. Die Berücksichtigung vorausgegangener Steuerwerte kann mit herkömmlichen Steuermethoden nicht realisiert werden und ermöglicht ein besonders präzises und schnelles Anlernen bzw. Trainieren. Der Zustandsvektor für die Steuerdaten eines Steuerelements kann entsprechende Zustandsgrößen wie der Zustandsvektor eines Parameters oder eine Untergruppe daraus umfassen. Vorzugsweise sind die Zustandsvektoren der Steuerdaten für alle Steuerelemente gleich lang, d.h. bestehen aus den gleichen Zustandsgrößen. Der Zustandsvektor für die Steuerdaten eines Steuerelements kann beispielsweise mindestens drei der folgenden Zustandsgrößen, vorzugsweise alle 21 der folgenden Zustandsgrößen, umfassen:
- einen ersten Steuerwert SW1, d.h. zu einem ersten Zeitpunkt,
- Differenzbetrag zwischen dem ersten Steuerwert und einem zweiten Steuerwert SW2, d.h. einem Steuerwert nach einem vorgegebenen Intervall zu einem zweiten Zeitpunkt, |SW1-SW2| ("Gradient zum ersten Steuerwert"),
- Differenzbetrag von dem Differenzbetrag zwischen dem ersten Steuerwert und dem zweiten Steuerwert und von dem Differenzbetrag zwischen dem zweiten Steuerwert und einem dritten Steuerwert, ||SW1-SW2| - |SW2-SW3|| ("Änderung Gradient zum ersten Steuerwert"),
- Mittelwert über zwei Steuerwerte bzw. Mittelwert des ersten und zweiten Steuerwerts, d.h. Mittelwert (SW1, SW2),
- Mittelwert über vier Steuerwerte bzw. Mittelwert des ersten, zweiten, dritten und eines vierten Steuerwerts, d.h. Mittelwert (SW1, SW2, SW3, SW4),
- Mittelwert über acht Steuerwerte, d.h. Mittelwert (SW1, ..., SW8),
- Mittelwert über sechzehn Steuerwerte, d.h. Mittelwert (SW1, ..., SW16),
- Mittelwert über den Gradienten zum ersten Steuerwert und den Gradienten zum zweiten Steuerwert bzw. Mittelwert über die Differenzbeträge zwischen drei aufeinander folgenden Steuerwerten bzw. Mittelwert über die Differenzbeträge zwischen dem ersten Steuerwert und dem zweiten Steuerwert und zwischen dem zweiten Steuerwert und dem dritten Steuerwert, d.h. Mittelwert (|SW1-SW2|, |SW2-SW3|),
- Mittelwert über die Gradienten zu den ersten bis vierten Steuerwerten bzw. Mittelwert über die Differenzbeträge zwischen fünf aufeinander folgenden Steuerwerten bzw. Mittelwert über den Differenzbetrag zwischen dem ersten Steuerwert und dem zweiten Steuerwert und den Differenzbetrag zwischen dem zweiten Steuerwert und dem dritten Steuerwert und den Differenzbetrag zwischen dem dritten Steuerwert und dem vierten Steuerwert und den Differenzbetrag zwischen dem vierten Steuerwert und dem fünften Steuerwert, d.h. Mittelwert (|SW1-SW2|, |SW2-SW3|,|SW3-SW4|, |SW4-SW5|),
- Mittelwert über die Gradienten zu den ersten bis achten Steuerwerten bzw. Mittelwert über die Differenzbeträge zwischen neun aufeinander folgenden Steuerwerten bzw. Mittelwert über den Differenzbetrag zwischen dem ersten Steuerwert und dem zweiten Steuerwert und den Differenzbetrag zwischen dem zweiten Steuerwert und dem dritten Steuerwert und den Differenzbetrag zwischen dem dritten Steuerwert und dem vierten Steuerwert und den Differenzbetrag zwischen dem vierten Steuerwert und dem fünften Steuerwert und den Differenzbetrag zwischen dem fünften Steuerwert und dem sechsten Steuerwert und den Differenzbetrag zwischen dem sechsten Steuerwert und dem siebten Steuerwert und den Differenzbetrag zwischen dem siebten Steuerwert und dem achten Steuerwert und den Differenzbetrag zwischen dem achten Steuerwert und dem neunten Steuerwert, d.h. Mittelwert (|SW1-SW2|, |SW2-SW3|,|SW3-SW4|, .., |SW8-SW9|),
- Mittelwert über die Änderung des Gradienten zum ersten Steuerwert und über die Änderung des Gradienten zum zweiten Steuerwert bzw. Mittelwert über den Differenzbetrag von dem Differenzbetrag zwischen dem ersten Steuerwert und dem zweiten Steuerwert und von dem Differenzbetrag zwischen dem zweiten Steuerwert und dem dritten Steuerwert, und über den Differenzbetrag von dem Differenzbetrag zwischen dem zweiten Steuerwert und dem dritten Steuerwert und von dem Differenzbetrag zwischen dem dritten Steuerwert und dem vierten Steuerwert, d.h. Mittelwert (| |SW1-SW2| - |SW2-SW3| |, | |SW2-SW3| - |SW3-SW4| |),
- Mittelwert über die Änderung des Gradienten zum ersten Steuerwert, über die Änderung des Gradienten zum zweiten Steuerwert, über die Änderung des Gradienten zum dritten Steuerwert und über die Änderung des Gradienten zum vierten Steuerwert bzw. Mittelwert über den Differenzbetrag von dem Differenzbetrag zwischen dem ersten Steuerwert und dem zweiten Steuerwert und von dem Differenzbetrag zwischen dem zweiten Steuerwert und dem dritten Steuerwert, über den Differenzbetrag von dem Differenzbetrag zwischen dem zweiten Steuerwert und dem dritten Steuerwert und von dem Differenzbetrag zwischen dem dritten Steuerwert und dem vierten Steuerwert, und über den Differenzbetrag von dem Differenzbetrag zwischen dem dritten Steuerwert und dem vierten Steuerwert und von dem Differenzbetrag zwischen dem vierten Steuerwert und dem fünften Steuerwert, und über den Differenzbetrag von dem Differenzbetrag zwischen dem vierten Steuerwert und dem fünften Steuerwert und von dem Differenzbetrag zwischen dem fünften Steuerwert und dem sechsten Steuerwert, d.h. Mittelwert von (| |SW1-SW2| - |SW2-SW3| |, | SW2-SW3| - |SW3-SW4| |, | |SW3-SW4| - |SW4-SW5| |, | | SW4-SW5| - |SW5-SW6| |),
- Mittelwert über die Änderung des Gradienten zum ersten Steuerwert, über die Änderung des Gradienten zum zweiten Steuerwert, über die Änderung des Gradienten zum dritten Steuerwert, über die Änderung des Gradienten zum vierten Steuerwert, über die Änderung des Gradienten zum fünften Steuerwert, über die Änderung des Gradienten zum sechsten Steuerwert, über die Änderung des Gradienten zum siebten Steuerwert, über die Änderung des Gradienten zum achten Steuerwert, und über die Änderung des Gradienten zum neunten Steuerwert, d.h. Mittelwert von (| |SW1-SW2| - |SW2-SW3| |, | |SW2-SW3| - |SW3-SW4| |, | |SW3-SW4| - |SW4-SW5| |, | |SW4-SW5| - |SW5-SW6| |, | |SW5-SW6| - ISW6-SW71 |, | |SW6-SW7| - |SW7-SW8| |, | ISW7-SW81 - |SW8-SW9| |, | |SW8-SW9| - |SW9-SW10| |),
- Steuerwert zu Totzeit 1, d.h. Steuerwert, der um Totzeit 1 vorausliegt, wenn Totzeit 1 vorzugsweise dem vorgegebenen Intervall zwischen zwei aufeinanderfolgenden Steuerwerten entspricht, z.B. 5 Minuten, dann zweiter Steuerwert SW2,
- Gradient zum Steuerwert zu Totzeit 1 bzw. Gradient zum zweiten Steuerwert |SW2-SW31,
- Änderung des Gradienten zum Steuerwert zu Totzeit 1 bzw. Änderung des Gradienten zum zweiten Steuerwert ||SW2-SW3| - SW3-SW411,
- Steuerwert zu Totzeit 3 (Totzeit 3 entspricht vorzugsweise drei Intervallen, z.B. 15 Minuten) bzw. vierter Steuerwert SW4,
- Gradient zum Steuerwert zu Totzeit 3 bzw. Gradient zum vierten Steuerwert |SW4-SW5|,
- Änderung des Gradienten zum Steuerwert zu Totzeit 3 bzw. Änderung des Gradienten zum vierten Steuerwert ||SW4-SW5| - |SW5-SW6||,
- Steuerwert zu Totzeit 5 (Totzeit 5 entspricht vorzugsweise fünf Intervallen, z.B. 25 Minuten) bzw. sechster Steuerwert SW6,
- Gradient zum Steuerwert zu Totzeit 5 bzw. Gradient zum sechsten Steuerwert |SW6-SW7|.

Die sechzehn Steuerwerte sind vorzugsweise mit einem vorgegebenen Intervall aufeinanderfolgend. Hierbei ist zu beachten, dass die sechzehn Steuerwerte zeitlich rückwärts gezählt sind, d.h. die zeitliche Reihenfolge ist SW16, SW15, ..., SW1. Ein weiterer Zustandsvektor für die Steuerdaten eines Steuerelements kann nach dem Prinzip des "sliding-window" bestimmt werden. Somit kann jeweils nach Ablauf eines Zeitintervalls (z.B. 5 Minuten) ein Zustandsvektor für die Steuerdaten eines Steuerelements für die Eingabedaten zum Anlernen bzw. Trainieren des Netzes bestimmt werden.

Beim Steuern durch das trainierte neuronale Netz können die Ausgabedaten einen Zustandsvektor mit drei Zustandsgrößen für die Steuerdaten für jedes Steuerelement umfassen. Der Zustandsvektor für die Steuerdaten eines Steuerelements umfasst vorzugsweise folgende Zustandsgrößen:
- einen Steuerwert bzw. einen ersten Steuerwert SW1,
- Gradient zum Steuerwert bzw. Differenzbetrag zwischen dem ersten Steuerwert und einem diesen vorausgehenden zweiten Steuerwert SW2, |SW1-SW2|, und
- Änderung des Gradienten zum Steuerwert bzw. Differenzbetrag des Differenzbetrags zwischen dem ersten Steuerwert und dem diesen vorausgehenden zweiten Steuerwert und des Differenzbetrags zwischen dem zweiten Steuerwert und einem dem zweiten Steuerwert vorausgehenden dritten Steuerwert, | |SW1-SW2| - |SW2-SW3| |.

Die berechneten Ausgabedaten können interpoliert werden, um eine quasi-kontinuierliche Steuerung zu ermöglichen. Obwohl die Eingabedaten nur in einem vorgegebenen Zeitintervall (entsprechend dem Zeitintervall zwischen aufeinanderfolgenden Parameterwerten, z.B. 5 Minuten) bestimmt werden kann, kann dadurch das Ausgeben der Ausgabedaten häufiger, z.B. alle 30 Sekunden, erfolgen.

Der Parameter des Müllaufgabesystems kann eine Leistungssollwertvorgabe für eine Steuerung des Müllaufgabesystems und/oder einen Druck einer Ölhydraulik des Müllaufgabesystems umfassen. Hierdurch kann eine Müllmenge, beispielsweise eine Müllmenge pro Zeiteinheit, festgelegt werden.

Der Parameter des Verbrennungsluftkanalsystems kann zumindest einen der folgenden Parameter umfassen: Primärluftdruck, Primärluftdurchflussmenge, Luftdurchflussmenge zu einem Bereich eines Rosts (Rostbereich), Luftdruck unter einem Rostbereich, Luftdurchflussmenge zu einer Walze eines Walzenrosts, Luftdruck unter einer Walze eines Walzenrosts, Staudruck unter einem Rostbereich, Staudruck unter einer Walze eines Walzenrosts, Sekundärluftdruck und Sekundärluftdurchflussmenge. Die Rostbereiche können aneinandergrenzende Bereiche eines Rosts, insbesondere eines Vorschubrosts oder eines Walzenrosts, sein.

Der Parameter des Rauchgasabführungskanalsystems kann zumindest einen Messwert einer Sauerstoffkonzentration und/oder einen Messwert einer Kohlenstoffmonoxidkonzentration umfassen.

Der Parameter des Frischdampfleitungssystems kann zumindest einen der folgenden Parameter umfassen: Druck im Frischdampfleitungssystem, Frischdampfdurchflussmenge und Frischdampftemperatur.

Die Steuerelemente können zumindest eines der folgenden Elemente umfassen: mindestens eine Luftklappe des Verbrennungsluftkanalsystems, einen Lastregler des Müllaufgabesystems, und einen Sauerstoff-Regler. Die mindestens eine Luftklappe des Verbrennungsluftkanalsystems kann je eine Luftklappe für die Primärluftzufuhr zu einem Bereich von mehreren Bereichen des Rosts und/oder zu einer Walze von mehreren Walzen eines Walzenrosts umfassen. Im Falle eines Walzenrosts mit fünf Walzen können die Ausgabedaten beispielsweise Steuerdaten für die Luftklappen für die Primärluftzufuhr zur vierten Walze und für die Luftklappe für die Primärluftzufuhr zur fünften Walze umfassen, oder Steuerdaten für Luftklappen für die Primärluftzufuhr zu allen Walzen. Die mindestens eine Luftklappe des Verbrennungsluftkanalsystems kann mindestens eine Primärluftklappe, d.h. eine Klappe, insbesondere eine Drallklappe, zum Steuern einer gesamten Primärluftzufuhr in das Verbrennungsluftkanalsystem, umfassen. Die mindestens eine Luftklappe des Verbrennungsluftkanalsystems kann mindestens eine Sekundärluftklappe, d.h. eine Klappe zum Steuern einer Sekundärluftzufuhr, umfassen. Beispielsweise kann eine erste Sekundärluftklappe an einer ersten bzw. vorderen Seite des Feuerraums und eine zweite Sekundärluftklappe an einer zweiten bzw. hinteren bzw. rückseitigen Seite des Feuerraums angeordnet sein. "Vordere" bzw. "hintere" Seite des Feuerraums ist hierbei in Rostbewegungsrichtung zu sehen. Hierbei kann Primärluft und/oder Sekundärluft Luft aus dem Kesselhaus bezeichnen. Vorzugsweise umfassen die Ausgabedaten zumindest Steuerdaten für mindestens eine Luftklappe zur Primärluftzufuhr zu einem Rostbereich und/oder zu einer Walze eines Walzenrosts sowie Steuerdaten für mindestens eine Sekundärluftklappe.

Die Ausgabedaten können ferner Steuerdaten für einen Lastregler des Müllaufgabesystems umfassen, beispielsweise eine Kurvenverschiebung bzw. Verschiebung eines Arbeitspunkt des Müllaufgabesystems, und/oder eine Leistungsvorgabe für den Lastregler bzw. für das Müllaufgabesystem, d.h. eine Müllmenge pro Zeit (in Tonne/Stunde, t/h). Die Ausgabedaten können ferner Steuerdaten für einen Sauerstoff-Regler zum Regeln einer Sauerstoffkonzentration im Feuerraum umfassen. Dieser Sauerstoff-Regler, auch unterlagerter Sauerstoff-Regler genannt, kann eingerichtet sein, die Primär- und Sekundärluftklappen anzusteuern.

Zum Anlernen kann ein Vektorprozessor, beispielsweise GK110 oder Turing 102, verwendet werden. Vorzugsweise werden während des Trainierens Kernels in sequenzieller Abfolge aufgerufen. Hierbei können beispielsweise bis zu 1024 Blöcke mit bis zu 1024 Threads gleichzeitig gestartet werden. Das neuronale Netz ist vorzugsweise ein dreischichtiges Netz mit einer Schicht von Input-Neuronen, einer Schicht von Hidden-Neuronen und einer Schicht von Output-Neuronen. Die Anzahl der Input-Neuronen kann dem Produkt aus der Anzahl der Parameter und der Dimension der Zustandsvektoren der Parameter, z.B. 504, entsprechen. Ebenso kann die Anzahl der Output-Neuronen dem Produkt aus der Anzahl der Steuerelemente und einem Zustandsvektor der Ausgabedaten, z.B. 252, entsprechen. Die Anzahl der Hidden-Neuronen beträgt vorzugweise 1024. Vorzugsweise wird ein Back-Propagation-Algorithmus, insbesondere mit paralleler Matrix-Vektor-Multiplikation, und/oder ein "deep-learning"-Algorithmus zum Anlernen bzw. Trainieren des neuronalen Netzes verwendet. Vorzugsweise wird serielle Matrix-Vektor-Multiplikation zum Steuern durch das trainierte neuronale Netz verwendet. Das angelernte neuronale Netz kann in einer Steuereinheit des Kessels integriert und/oder in einer getrennten Rechnereinheit bzw. einem Controller vorgesehen werden.

Der zu steuernde Kessel der Müllverbrennungsanlage, die auch als thermische Wertstoffbehandlungsanlage bezeichnet werden kann, weist demnach ein Müllaufgabesystem, einen Feuerraum, einen Entschlacker und einen (vorzugsweise zwischen Müllaufgabesystem und Entschlacker im Feuerraum angeordneten) Rost auf. Der Rost kann ein Vorschub-, Rückschub-, Schütt-, Treppen-, Wander- oder Walzenrost sein. Der Kessel kann ferner ein Kesselhaus umfassen, in dem zumindest der Feuerraum mit dem Rost angeordnet ist. Vorzugsweise umfasst der Kessel ferner eine Steuereinheit, beispielsweise ein Prozessleitsystem oder "distributed control system, DCS", zum Steuern des Kessels, insbesondere zum Steuern der Steuerelemente. Beispielsweise wird Müll vom Müllaufgabesystem auf den Rost im Feuerraum geladen und durch den Rost in Richtung Entschlacker bewegt und währenddessen verbrannt. Verbrennungsluft, d.h. Primär- und Sekundärluft, wird über das Verbrennungsluftkanalsystem des Kessels in den Feuerraum geleitet. Primärluft wird hierbei vorzugsweise von unten dem Feuerraum bzw. dem Rost zugeführt, während Sekundärluft dem Feuerraum bzw. dem Rost vorzugsweise von oben zugeführt wird. Das bei der Verbrennung des Mülls im Feuerraum entstehende Rauchgas wird über das Rauchgasabführungskanalsystem des Kessels einer Rauchgasreinigungsanlage (Standard in West-Europa) oder zu einem Kamin geleitet. Ferner umfasst der Kessel die Steuerelemente, sowie eine Kesseltrommel und ein Frischdampfleitungssystem, um Frischdampf zur Energiegewinnung zu erzeugen. Zudem kann der Kessel entsprechende Sensoren umfassen, um Parameter- bzw. Messwerte von einem oder mehreren der Parameter zu messen, z.B. Drucksensoren, Temperatursensoren, Durchflussmesser, etc.

Im neuronalen Netz kann eine parallele Matrix-Vektor-Multiplikation mit folgendem Code durchgeführt werden:

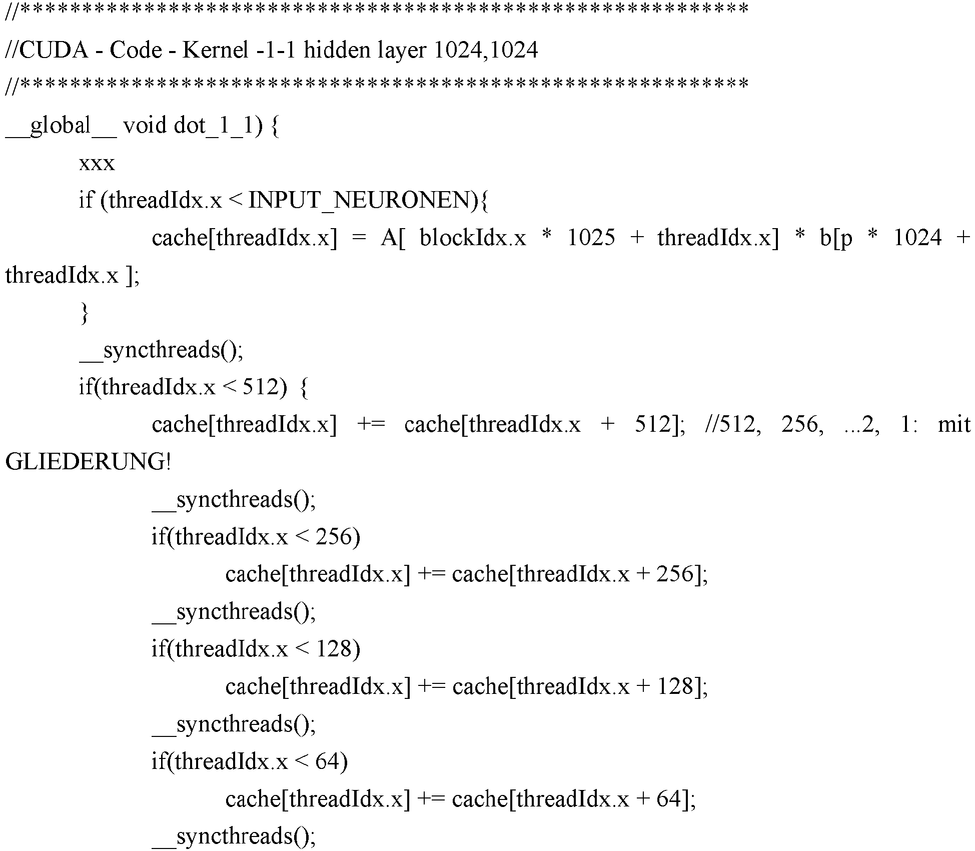

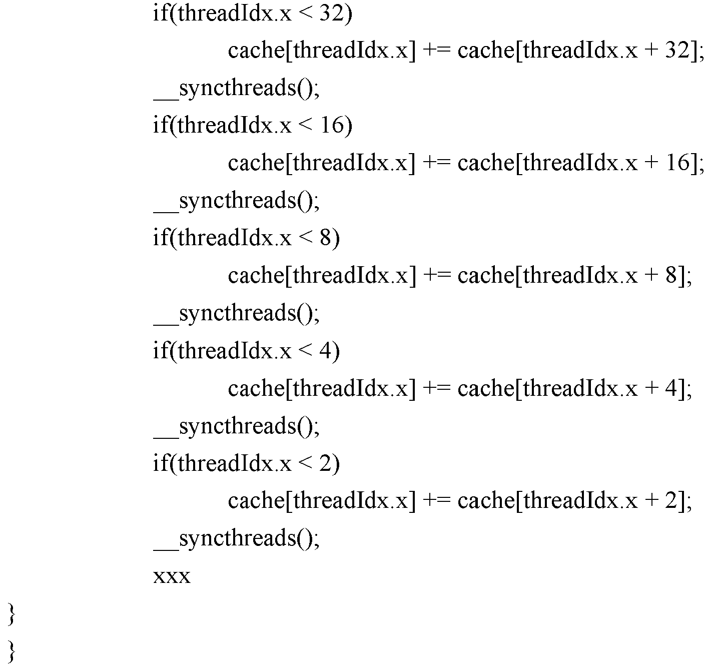

Vorzugsweise kann die Reihenfolge der Kernel-Aufrufe folgendermaßen erfolgen:

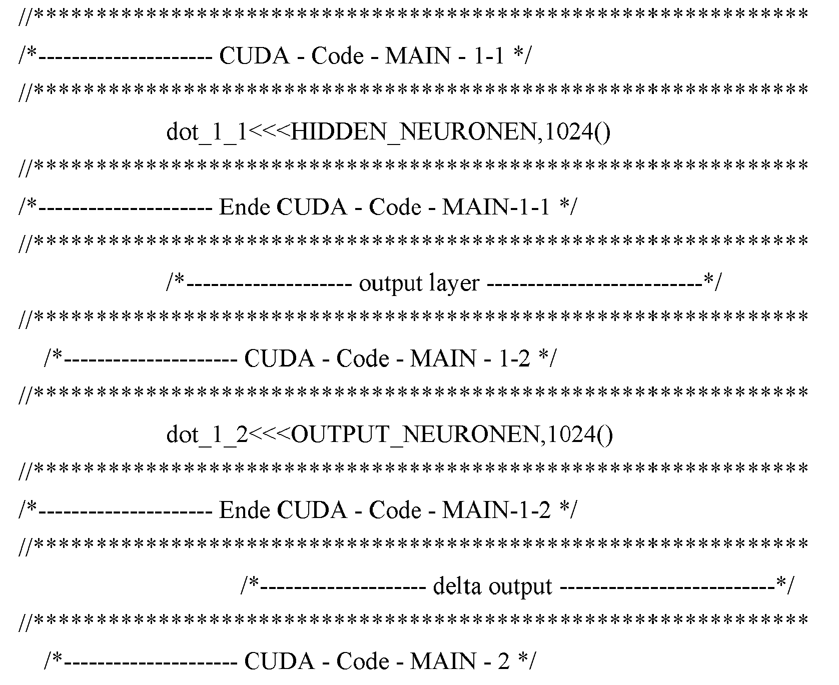

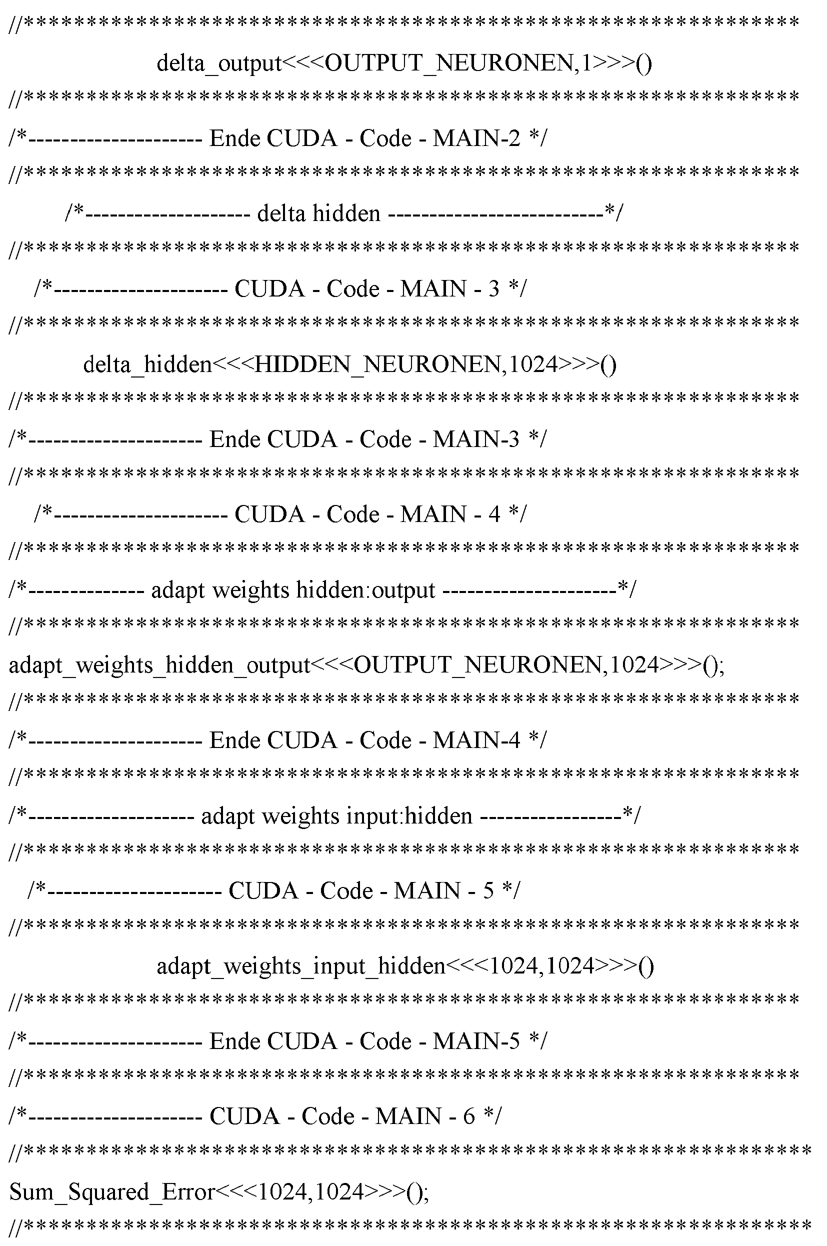

Der Programmcode zur Umsetzung des Verfahrens kann folgendermaßen ausgestaltet sein:
Das CUDA-Hauptprogramm mit Aufruf der Kernels:
- batchnet_short_MVA_CUDA-I-624-O-234. cu (CUDA-C - Programm mit Kernels)

### Kernels:

- CUDA - Code - Kernel -1 (hochparallele Matrix-Vektor-Multiplikation) _global_void dot_1_1( float *A, float *b, int p, float *c, int Zeilen, int Spalten)
- CUDA - Code - Kernel -2 (Differenz berechnetes Muster mit vorgegebenen Muster) _global_ void delta_output( float *target, float *out2, int p, float *delta2)
- CUDA - Code - Kernel -3 bis Kernel -6 _global_ void delta_hidden(float *w2, float *delta2, int p, float *out1, float *delta1) _global_void_adapt_weights_hidden_output(float *delta2, int nPatterns, float eta, float alpha, float *out1, float *delw2, float *w2) _global_void adapt_weights_input_hidden(float *deltal, int nPatterns, float eta, float alpha, float *out0, float *delw1, float *w1) _global_ void Sum_Squared_Error(float ErrorLevel, float *target, float *out2, float *error_sum)

### Kurze Beschreibung der Zeichnungen

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.
Fig. 1 zeigt eine vereinfachte Skizze eines Rosts eines Kessels einer Müllverbrennungsanlage;
Fig. 2a zeigt ein erstes Ausführungsbeispiel eines Luft-Rauchgas-Schema eines Kessels einer Müllverbrennungsanlage;
Fig. 2b zeigt ein zweites Ausführungsbeispiel eines Luft-Rauchgas-Schema eines Kessels einer Müllverbrennungsanlage;
Fig. 3 zeigt einen Teil eines Frischdampfschemas eines Kessels einer Müllverbrennungsanlage;
Fig. 4 zeigt eine beispielhafte Struktur eines dreischichtigen neuronalen Netzes;
Fig. 5 zeigt ein Ausführungsbeispiel eines Verfahrensablaufdiagramms für ein erfindungsgemäßes Verfahren zum Steuern eines Kessels einer Müllverbrennungsanlage; und
Fig. 6 zeigt ein Ausführungsbeispiel eines Verfahrensablaufdiagramms für ein erfindungsgemäßes Verfahren zum Trainieren eines neuronalen Netzes.

### Detaillierte Beschreibung der Zeichnungen

Für die Steuerung und Regelung von physikalischen Systemen, wie beispielsweise einer komplexen Anlage, wird ein Systemmodell basierend auf mathematischen Differentialgleichungen zur Abbildung physikalischer Gesetzmäßigkeiten zugrunde gelegt. Mit so einem Systemmodell kann man Steuer- und Regelstrukturen mit Zustandsreglern entwerfen.

Erfindungsgemäß wird ein neuronales Netz trainiert, um dieses Systemmodell zur Steuerung und Regelung von physikalischen Systemen zu erlernen. Erfindungsgemäß wird zudem das trainierte neuronale Netz zur Steuerung einer Anlage verwendet. Es wird nachfolgend sowohl das Trainieren (=Anlernen) eines neuronalen Netzes für eine Anlagensteuerung als auch das Steuern der Anlage mittels des angelernten neuronalen Netzes beschrieben.

Dieses neuronale Netz lernt über das Ausführen von einfachen Operationen, wie Skalar-Multiplikation mit anschließender Aktivierungsfunktion. Diese einfachen Operationen können in hohem Maß parallel abgearbeitet werden. Hierzu werden bevorzugt Parallelrechner (=parallel computing) verwendet. Ein Parallelrechner ist ein Rechner oder ein Rechnersystem, bei dem Rechenoperationen gleichzeitig unter anderem auf mehreren Haupt- und/oder Nebenprozessoren durchgeführt werden können. Lediglich zur Veranschaulichung der Dimension einer möglichen Rechenleistung wird - als ein nicht beschränkendes Beispiel - der (Vektor-) Grafikprozessor GK110 der Firma NVIDIA genannt, der gleichzeitig bis zu 30720 Rechenoperationen (=Threads) ausführen kann.

Ein Trainieren des neuronalen Netzes und auch ein Steuern einer Anlage durch ein trainiertes neuronales Netz kann durch eine spezielle Rechnerarchitektur, beispielsweise die "Compute Unified Device Architecture", kurz CUDA, Architektur verbessert werden. Dabei können Teile eines Programms durch hochgradig parallelisierte Programmabläufe zeitgleich abgearbeitet werden. Durch Verwenden dieser speziellen Rechnerarchitektur kann demnach eine Rechenleistung eines Computersystems hocheffizient zum Anlernen des neuronalen Netzes einer komplexen Anlage genutzt werden, wodurch das Programm im Vergleich zu einem konventionellen Rechner beziehungsweise Rechnersystem signifikant schneller abgearbeitet wird. Es wird bevorzugt ein (oder mehrere) Vektor- (bzw. Grafik) - Prozessor verwendet. Durch diese Architektur kann erstens das neuronale Netz unter vertretbaren Zeitaufwänden trainiert werden und zweitens kann das angelernte Netz zur Steuerung von komplexen physikalischen Systemen, wie der Steuerung eines Kessels einer MVA, eingesetzt werden.

Alternativ kann das Trainieren des neuronalen Netzes und das Steuern eines komplexen physikalischen Systems durch ein trainiertes neuronales Netz auch mittels anderer Architekturen oder anderer Programmiertechniken, beispielsweise auf der Programmiersprache Python basiertem System, erfolgen.

Eine Fehlerrückführung, auch als Rückpropagierung oder "Backpropagation of Error" bezeichnet, wird als ein beispielhaftes Verfahren zum Trainieren des neuronalen Netzes verwendet. Für das Trainieren wird ein Datenmodell zu Grunde gelegt. Dieses Datenmodell umfasst Eingabedaten. Dies können reell gemessene Daten der zu steuernden Anlage sein, die zum Zweck des Trainierens bereitgestellt werden.

Die Eingabedaten können einen Zustandsvektor für einen Parameter umfassen. Der Zustandsvektor umfasst mehrere Zustandsgrößen des Parameters, beispielsweise mindestens eines von einem Parameterwert, einem Gradienten zu dem Parameterwert, einer Änderung des Gradienten zu dem Parameterwert, einem Mittelwert über zwei oder mehr aufeinanderfolgende Parameterwerte, einem Mittelwert über Gradienten zu zwei oder mehr aufeinanderfolgenden Parameterwerten, einem Mittelwert über Änderungen der Gradienten zu zwei oder mehr aufeinanderfolgenden Parameterwerten, einem um eine vorgegebene Totzeit vorausgegangenen Parameterwert, einem Gradienten zu dem vorausgegangenen Parameterwert, und einer Änderung des Gradienten zu dem vorausgegangenen Parameterwert. Die Berücksichtigung vorausgegangener Parameterwerte kann mit herkömmlichen Steuermethoden nicht realisiert werden und ermöglicht eine besonders präzise und schnelle Steuerung der Anlage. Vorzugsweise sind die Zustandsvektoren aller Parameter gleich lang, d.h. sie bestehen bevorzugt aus den gleichen Zustandsgrößen.

Das neuronale Netz berechnet Ausgabedaten und gibt diese aus. Diese Ausgabedaten sind beispielsweise Steuerdaten für Steuerelemente der Anlage.

Beim Steuern durch das trainierte neuronale Netz können die Ausgabedaten einen Zustandsvektor mit drei Zustandsgrößen für die Steuerdaten für jedes Steuerelement umfassen, nämlich einen Steuerwert, eine Differenzbetrag zwischen dem Steuerwert und einem vorausgehenden zweiten Steuerwert; und einen Differenzbetrag zwischen dem Differenzbetrag zwischen dem Steuerwert und dem diesen vorausgehenden zweiten Steuerwert und dem Differenzbetrag zwischen dem zweiten Steuerwert und einem dem zweiten Steuerwert vorausgehenden dritten Steuerwert.

Die berechneten Ausgabedaten können interpoliert werden, um eine quasi-kontinuierliche Steuerung zu ermöglichen. Obwohl die Eingabedaten nur in einem vorgegebenen Zeitintervall, beispielweise 5 Minuten, bestimmt werden können, kann das Ausgeben der Ausgabedaten häufiger, beispielsweise alle 30 Sekunden, erfolgen. Diese angegeben Intervalle sind typisch für die Kesselsteuerung einer MBA. Das Bestimmen der Eingabedaten kann alternativ auch in viel größeren Zeitabständen, beispielsweise alle 10 Minuten oder mehr Minuten erfolgen. Das Bestimmen der Eingabedaten kann alternativ auch in viel kürzeren Zeitabständen, beispielsweise jede Minute oder alle 30 Sekunden oder in noch kürzeren Zeitabständen erfolgen (hier sind transiente Übergangsvorgänge zu beachten). Das Ausgeben der Ausgabedaten kann alternativ in größeren Zeitabständen als das Bestimmen der Eingabedaten erfolgen, beispielsweise alle 5 Minuten, alle 10 Minuten oder in längeren Zeitabständen. Das Ausgeben der Ausgabedaten kann alternativ in kürzeren Zeitabständen erfolgen, beispielsweise alle 10 Sekunden oder in noch kürzeren Zeitabständen erfolgen (hier sind transiente Übergangsvorgänge zu beachten).

Nachfolgend wird das Trainieren eines neuronalen Netzes für eine Anlagensteuerung und auch das Steuern der Anlage mittels des angelernten neuronalen Netzes beispielhaft an der Steuerung eines Verbrennungsprozesses in einem Kessel einer Müllverbrennungsanlage, kurz MVA, erläutert. Hierbei werden für die Steuerung der MVA von einem trainierten neuronalen Netz Ausgabedaten in Abhängigkeit von Parametern berechnet und ausgegeben, um einen Verbrennungsprozess in einem Kessel einer MVA zu steuern.

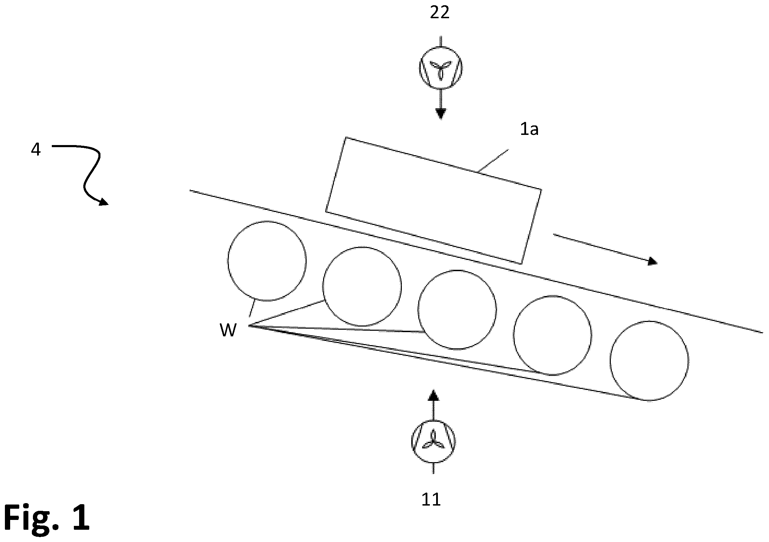

In der Betriebsführung einer MVA gibt es verschiedene Bereiche, die bislang unter gegebenen Umständen durch menschliches Bedienpersonal gesteuert werden. Ein Beispiel für so einen Bereich ist der in der **Fig. 1** gezeigte Rost 4 (Verbrennungsrost) einer MVA.

Der in der **Fig. 1** angedeutete Rost 4 umfasst einen Walzenrost. Bei diesem Walzenrost besteht die Rostfläche aus fünf hintereinanderliegenden, rotierenden Walzen w1, ..., w5 (Walzentrommeln), die vorzugsweise zumindest teilweise mit Mitnehmern bestückt sind, um Müll 1a durch die Rotation der Walzen mitzureißen. Es können auch Walzenroste mit weniger als fünf Walzen, beispielsweise 3 oder 4 Walzen eingesetzt werden. Es können auch Walzenroste mit mehr als fünf Walzen, beispielsweise 6 bis 10 Walzen eingesetzt werden. Mit einem Walzenrost wird eine besonders starke Umwälzung und Schürung erreicht. Ein Walzenrost wird vor allem in MVAs für sehr problematischen, nicht aufbereiteten, inhomogenen Müll 1a eingesetzt, der massiv zum Verkleben oder Verschlacken neigt.

Die Erfindung ist nicht auf einen speziellen Rosttyp beschränkt. Der Rost kann alternativ auch einen Schüttrost, insbesondere einen Vorschubrost oder einen Rückschubrost, einen Wanderrost, einen Planrost oder einen Unterschubrost umfassen. Die von unterhalb des Rosts 4 zugeführte Primärluft 11 und die von oberhalb des Rosts 4 zugeführte Sekundärluft 22 können einen wesentlichen Einfluss auf die Verbrennung und die Bildung von Reaktionsprodukte haben. Mit der Primärluft 11 wird eine unvollständige Verbrennung auf dem Rost 4 eingeleitet. Die Luftmenge sollte so dosiert werden, dass ein guter Ausbrand bei geringer Stickoxidbildung erreicht wird. Die Nachverbrennung der Radikale, wie Kohlenstoffmonoxid oder Kohlenwasserstoff kann in der Nachverbrennungszone durch Zuführung der Sekundärluft 22 stattfinden.

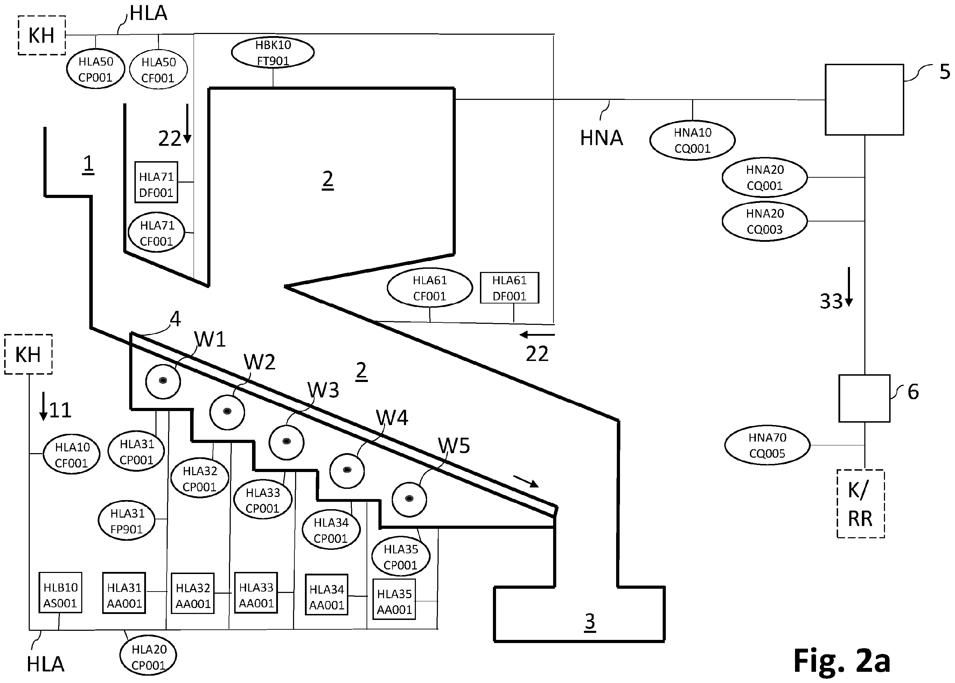

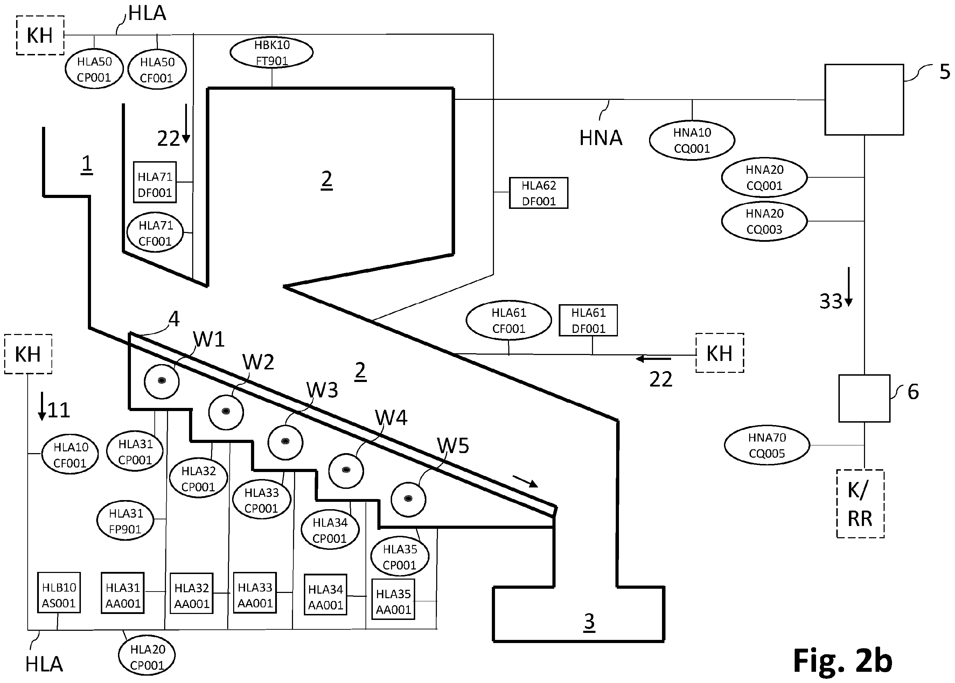

In den **Fig. 2a** und der **Fig. 2b** ist jeweils ein Luft-Rauchgas Steuerungsschema für einen Kessel in einer MVA gezeigt. Die Funktion des Kessels wird nachfolgend kurz erläutert.

Der Kessel hat ein Müllaufgabesystem 1. Hier wird der Müll in den Kessel der MVA eingebracht. Der Müll kann vorab konditioniert werden, um eine verbesserte Stetigkeit des Brennwerts des Mülls zu ermöglichen. Der Müll gelangt über das Müllaufgabesystem 1 in einen Feuerraum 2 des Kessels.

In der **Fig. 2a** und der **Fig. 2b** ist jeweils eine Rostfeuerung dargestellt. Diese Rostfeuerung folgt beispielsweise dem in der **Fig. 1** erläuterten Prinzip, ist aber nicht darauf beschränkt. Insbesondere können auch Vorschubroste als Rostfeuerung in dem Kessel der MVA vorgesehen werden. Durch die Verwendung einer Rostbefeuerung in einer MVA kann eine Aufbereitung des Mülls weniger aufwendig sein oder sie kann sogar gänzlich entfallen. Zur Beschickung des Rosts 4 können Förderbänder oder Müllaufgabeschieber benutzt werden, deren Ölhydrauliksysteme ein Teil der Eingabedaten für das neuronale Netz sein können. Über das Müllaufgabesystem 1, wird der Müll dosiert auf den Rost 4 in den Feuerraum 2 befördert. Der Rost 4 befördert den aufgegebenen Müll während der Verbrennungsphasen weiter.

Im Feuerraum 2 wird der Müll verbrannt. Die Verbrennungsrückstände fallen am Ende des Rosts 4 in einen Entschlacker 3. Aus den Entschlacker 3 können diese Verbrennungsrückstände über Stößel oder Kettenkratzer (nicht dargestellt) ausgetragen werden.

Das durch die Verbrennung entstehende Rauchgas 33 wird aus dem Feuerraum 2 beispielsweise mittels eines Saugzuggebläses 6 absaugt und durch einen Kamin K in die Atmosphäre abgeführt und/oder einer Rauchgasreinigungsanlage RR zugeführt. Zusätzlich kann zwischen dem Feuerraum 2 und dem Saugzuggebläse 6 ein Filter 5, bevorzugt ein Elektrofilter bzw. E-Filter, angeordnet sein.

Nicht dargestellt in dem Prinzipaufbau des Kessels der **Fig. 2a** und **Fig. 2b** ist ein optionaler Dampferzeuger, in welchem mittels des (heißen) Rauchgases 33 aus dem Feuerraum 2 Frischdampf erzeugt wird. Dieser Frischdampf kann über eine Turbine einen Generator zum Erzeugen von elektrischem Strom antreiben. Dieser Frischdampf kann alternativ oder zusätzlich als Fernwärme zum Heizen von Haushalten bzw. als Prozesswärme für industrielle Produktionsprozesse genutzt werden.

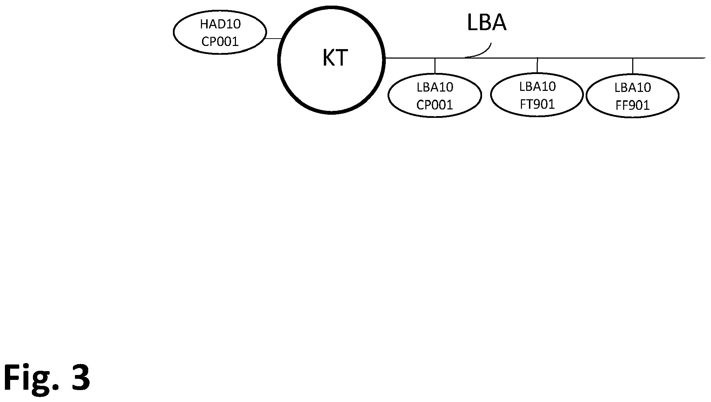

Zur Steuerung eines Kessels, beispielsweise mit einem in der **Fig. 2a** oder der **Fig. 2b** gezeigten Luft-Rauchgasschema und mit einem in der **Fig. 3** zum Teil gezeigten Frischdampfschema, kann ein trainiertes neuronales Netz verwendet werden. Hier sind ein Verbrennungsluftkanalsystem HLA, ein Rauchgasabführungskanalsystem HNA und ein Frischdampfleitungssystem (Fig. 3) als gemeinsames Steuerschema vorgesehen. Die in der **Fig. 2a** und der **Fig. 2b** gezeigten Luft-Rauchgasschemata unterscheiden sich lediglich bezüglich des Kanalsystems für die Sekundärluftzufuhr 22, sodass alle übrigen in der **Fig. 2a** oder der **Fig. 2b** gezeigten Elemente identisch sind. Die nachfolgenden Erläuterungen gemäß der **Fig. 2a** gelten auch für diese identischen Elemente der **Fig. 2b** und es wird lediglich an den entsprechenden Stellen der Beschreibung auf die Unterschiede zwischen der **Fig.2a** und der **Fig. 2b** hingewiesen. Die in der **Fig. 2a****,** **Fig. 2b** und in der **Fig. 3** gezeigten Elemente sind anhand eines Kraftwerk-Kennzeichensystems, KKS, klassifiziert. Reglementiert werden diese KKS-Kennzeichen in den VGB-Richtlinien VGB-B 105 und VGB-B 106, gemäß der zum Anmeldezeitpunkt gültigen Fassung VGB-S-811-01-2018-01-DE.

Nachfolgend werden die für die Steuerung des Kessels vom neuronalen Netz verwendeten Parameter gemäß der **Fig. 2a** und der **Fig. 3** kurz erläutert. Diese Parameter sind die Basis für die Eingabedaten für das neuronale Netz.

Vom Verbrennungsluftkanalsystem HLA können beispielsweise Parameter der Primärluft 11 erfasst werden. Die Primärluft ist bevorzugt Luft aus dem Kesselhaus. Dabei können die gesamte Primärluftdurchflussmenge (KKS-Element HLA10CF001) und der Primärluftdruck (KKS-Element HLA20CP001) im Kanalsystem des Primärluftzuflusses erfasst werden. Zudem können für jede der beispielsweise fünf Walzen w1, w2, w3, w4, w5 der Staudruck (KKS-Elemente HLA31CP001, HLA32CP001, HLA33CP001, HLA34CP001, HLA35CP001) im Kanalsystem des Primärluftzuflusses unter der jeweiligen Walze w1, w2, w3, w4, w5 erfasst werden. Zudem kann der Luftdruck (KKS-Element HLA31FP901) im Kanalsystem des Primärluftzuflusses im Bereich unter der ersten Walze w1 erfasst werden.

Vom Verbrennungsluftkanalsystem HLA können beispielsweise Parameter der Sekundärluft 22 erfasst werden. Die Sekundärluft 22 ist bevorzugt Luft aus dem Kesselhaus KH. Die in **Fig. 2a** dargestellte Sekundärluftzufuhr wird über ein Kanalsystem mit zwei Kanalsträngen gebildet. Die Sekundärluft 22 wird an sich gegenüberliegenden Bereichen des Feuerraums 2, beispielsweise der Vorderwand und der Rückwand des Feuerraums 2, eingeleitet. In der **Fig. 2a** können die gesamte Sekundärluftdurchflussmenge (KKS-Element HLA50CF001) und/oder der Sekundärluftdruck (KKS-Element HLA50CP001) vor der Aufteilung der Kanalstränge, sowie die Sekundärluftdurchflussmenge (KKS-Element HLA71CF001) im ersten Kanalstrang (beispielsweise für die Sekundärluftzufuhr zur Vorderwand des Feuerraums 2) und/oder die Sekundärluftdurchflussmenge (KKS-Element HLA61CF001) im zweiten Kanalstrang (beispielsweise für die Sekundärluftzufuhr zur Rückwand des Feuerraums 1) erfasst werden.

Zudem kann die Feuerraumtemperatur (KKS-Element HBK10FT901) als Parameter erfasst werden.

Im Rauchgasabführungskanalsystem HNA kann beispielsweise die Sauerstoffkonzentration (KKS-Element HNA10CQ001) im Rauchgas 33 im ersten Zug des Rauchgasabführungskanalsystems HNA als Parameter erfasst werden. Als ein Zug wird hierbei ein Abschnitt des Rauchgas-Weges im Rauchgasabführungskanalsystems HNA bezeichnet, den das Rauchgas 33 ohne wesentliche Richtungsänderung durchströmt.

Im Rauchgasabführungskanalsystem HNA kann ferner die Sauerstoffkonzentration (KKS-Element HNA20CQ001) und/oder die Kohlenstoffmonoxidkonzentration (KKS-Element HNA20CQ003) im Rauchgas 33 am Ende des Kessels als Parameter erfasst werden. Die Erfassung erfolgt bevorzugt nach dem Filter 5 und vor dem Saugzuggebläse 6.

Im Rauchgasabführungskanalsystem HNA kann zudem die Kohlenstoffmonoxidkonzentration (KKS-Element HNA70CQ005) im Rauchgas 33 vor dem bzw. im Kamin K oder vor der Rauchgasreinigungsanlage RR als Parameter erfasst werden.

Im Frischdampfsystem LBA **(****Fig. 3****)** kann beispielsweise der Druck (KKS-Element LBA10CP001) im Frischdampfleitungssystem und/oder die Frischdampfdurchflussmenge (KKS-Element LBA10FF901) und/oder die Frischdampftemperatur (KKS-Element LBA10FT901) erfasst werden.

Im Verdampfersystem HAD **(****Fig. 3****)** kann der Kesseltrommeldruck (KKS-Element HAD10CP001) des Dampferzeugers als Parameter erfasst werden.

Zudem können Leistungssollwertvorgabe (KKS-Element HHC00AS001) oder ein erster Druck (HHC21CP001) bzw. ein zweiter Druck (HHC22CP001) einer Ölhydraulik des Müllaufgabesystems 1 als Parameter erfasst werden (nicht dargestellt).

In der **Fig. 2b** ist im Unterschied zur **Fig. 2a** eine Variante für die Sekundärluftzufuhr dargestellt. Die übrigen Elemente der **Fig. 2b** entsprechen den jeweiligen Elementen der **Fig. 2a** und es wird auf die entsprechende Beschreibung verwiesen. In der Fig. 2b erfolgt die Sekundärluftzufuhr 22 über zwei getrennte Kanalsysteme. Zudem wird einer der Kanäle des einen Kanalsystems in zwei Kanalstränge aufteilt. Die Sekundärluft 22 wird an sich gegenüberliegenden Bereichen des Feuerraums 2, beispielsweise an Vorderwand und Rückwand des Feuerraums 2, eingeleitet. Die (gesamte) Sekundärluftdurchflussmenge (KKS-Element HLA50CF001), der Sekundärluftdruck (KKS-Element HLA50CP001) vor der Aufteilung des ersten Kanalsystems in zwei Kanalstränge, die Sekundärluftdurchflussmenge (KKS-Element HLA71CF001) an der Vorderwand und/oder die Sekundärluftdurchflussmenge (KKS-Element HLA61CF001) an der Rückwand im zweiten Kanalsystem können als Parameter der Sekundärluft 22 erfasst werden.

Die Tabelle 1 listet mögliche Eingangsparameter zur Steuerung eines Kessels gemäß der **Fig. 2a****,** **Fig. 2b** und **Fig. 3** durch das trainierte neuronale Netz bzw. zum Trainieren eines neuronalen Netzes auf:

**Tabelle 1 - Potenzielle Eingangsparameter für das neuronale Netz**

| **KKS-Element** | **Erläuterungen zum KKS-Element** |
|---|---|
| HAD10CP001 | Kesseltrommeldruck |
| HBK10FT901 | Feuerraumtemperatur |
| HHC00AS001 | Leistungssollwertvorgabe für Müllaufgabesystem |
| HHC21CP001 | erster Druck (P1) einer Ölhydraulik des Müllaufgabesystems |
| HHC22CP001 | zweiter Druck (P1) einer Ölhydraulik des Müllaufgabesystems |
| HLA10CF001 | Primärluftdurchflussmenge |
| HLA20CP001 | Primärluftdruck |
| HLA31FP901 | Luftdruck Walze W1 |
| HLA31CP001 | Staudruck unter der Walze W1 |
| HLA32CP001 | Staudruck unter der Walze W2 |
| HLA33CP001 | Staudruck unter der Walze W3 |
| HLA34CP001 | Staudruck unter der Walze W4 |
| HLA35CP001 | Staudruck unter der Walze W5 |
| HLA50CF001 | Sekundärdurchflussmenge gesamt |
| HLA50CP001 | Sekundärluftdruck |
| HLA61CF001 | Sekundärluftdurchflussmenge Rückwand (Strang 2) |
| HLA71CF901 | Sekundärluftdurchflussmenge Vorderwand (Strang 1) |
| HNA10CQ001 | Sauerstoffkonzentration im Rauchgas im ersten Zug des HNA |
| HNA20CQ001 | Sauerstoffkonzentration im Rauchgas am Kesselende |
| HNA20CQ003 | Kohlenstoffmonoxidkonzentration im Rauchgas am Kesselende |
| HNA70CQ005 | Kohlenstoffmonoxidkonzentration im Rauchgas im Kamin |
| LBA10CP001 | Druck im Frischdampfleitungssystem |
| LBA10FF901 | Frischdampfdurchflussmenge |
| LBA10FT901 | Frischdampftemperatur |

Nachfolgend werden die Steuerelemente, die zur Steuerung des Kessels mittels den vom neuronalen Netz erzeugten Ausgabedaten gemäß der **Fig. 2a****,** **Fig. 2b** und der **Fig. 3** gesteuert werden, erläutert.

Das Steuerelement kann beispielsweise mindestens eine Luftklappe des Verbrennungsluftkanalsystems HLA sein. Die mindestens eine Luftklappe des Verbrennungsluftkanalsystems HLA kann eine Luftklappe (KKS-Element HLB10AS001), insbesondere eine Drallklappe zum Steuern einer gesamten Primärluftzufuhr in das Verbrennungsluftkanalsystem HLA und/oder je eine Luftklappe (KKS-Elemente HLA31AA001, HLA32AA001, HLA33AA001, HLA34AA001, HLA35AA001) zu einer Walze w1, w2, w3, w4, w5 des Walzenrostes sein. Im Falle eines Walzenrosts mit den fünf Walzen w1, w2, w3, w4, w5 können die Ausgabedaten des neuronalen Netzes beispielsweise Steuerdaten für die Luftklappen (KKS-Elemente HLA34AA001 HLA35AA001) für die Primärluftzufuhr 11 zur vierten Walze w4 und zur fünften Walze w5 umfassen, oder Steuerdaten für alle Luftklappen (KKS-Elemente HLA31AA001, HLA32AA001, HLA33AA001, HLA34AA001 HLA35AA001) für die Primärluftzufuhr zu allen Walzen w1, w2, w3, w4, w5 sein. Die mindestens eine Luftklappe des Verbrennungsluftkanalsystems HLA kann mindestens eine Sekundärluftklappe (KKS-Element HLA61DF001, HLA71DF001), z.B. eine Klappe zum Steuern einer Sekundärluftzufuhr, gemäß **der** **Fig. 2a** umfassen. Beispielsweise kann eine erste Sekundärluftklappe (KKS-Element HLA71DF001) an einer ersten bzw. vorderen Seite des Feuerraums 1 und eine zweite Sekundärluftklappe (KKS-Element HLA61DF001) an einer zweiten bzw. hinteren bzw. rückseitigen Seite des Feuerraums 2 angeordnet sein. "Vordere" bzw. "hintere" Seite des Feuerraums 2 ist in Rostbewegungsrichtung zu sehen. Hierbei kann Primärluft Luft aus Kesselhaus KH und Sekundärluft 22 Luft aus dem Kesselhaus KH bezeichnen.

Alternativ kann die mindestens eine Luftklappe des Verbrennungsluftkanalsystems HLA eine Sekundärluftklappe (KKS-Elemente HLA61DF001, HLA62DF001, HLA71DF001), d.h. eine Klappe zum Steuern einer Sekundärluftzufuhr, z.B. gemäß **der** **Fig. 2b** umfassen. Beispielsweise kann eine erste Sekundärluftklappe (KKS-Element HLA71DF001) an einer ersten bzw. vorderen Seite des Feuerraums 2 und zwei zweite Sekundärluftklappen (KKS-Element HLA61DF001, HLA62DF001) an einer zweiten bzw. hinteren bzw. rückseitigen Seite des Feuerraums 2 angeordnet sein.

Die Ausgabedaten können ferner Steuerdaten für einen Sauerstoff-Regler zum Regeln einer Sauerstoffkonzentration im Feuerraum 2 umfassen. Dieser Sauerstoff-Regler, auch unterlagerter Sauerstoff-Regler genannt, kann eingerichtet sein, die Primär- und Sekundärluftklappen (KKS-Elemente HLB10AS001, HLA31AA001, HLA32AA001, HLA33AA001, HLA34AA001, HLA35AA001, HLA61DF001, HLA62 DF001, HLA71DF001) anzusteuern.

Die Steuerelemente können einen Lastregler (KKS-Element LBA10DF001) des Müllaufgabesystems 1 umfassen (nicht dargestellt). Die vom neuronalen Netz bereitgestellten Ausgabedaten können sodann Steuerdaten für den Lastregler (KKS-Element HHC00DU001) des Müllaufgabesystems 1 umfassen, um beispielsweise eine Kurvenverschiebung bzw. Verschiebung eines Arbeitspunkt des Müllaufgabesystems 1 zu bewirken, also den Rost 4 mit mehr oder mit weniger Müll zu beschicken. Die vom neuronalen Netz bereitgestellten Ausgabedaten können auch eine Leistungsvorgabe für den Lastregler (KKS-Element LBA10DF00) bzw. für das Müllaufgabesystem 1 umfassen, d.h. eine Müllmenge pro Zeit (in Tonne/Stunde, t/h).

Die Steuerelemente können auch mindestens ein Lastregler (KKS-Element LBA10DF001) des Verdampfer-Systems (nicht dargestellt) oder einen Sauerstoffregler (KKS-Element HNA10DQ901) des Rauchgasabführungsanlagesystems HNA (nicht dargestellt) umfassen.

Die Tabelle 2 listet mögliche Steuerelemente zum Steuern des Kessels gemäß **Fig. 2a** und **Fig. 3** mit einem trainierten neuronalen Netz auf:

**Tabelle 2 - Potenzielle Steuerelemente versorgt mit Ausgabedaten des neuronalen Netzes**

| **KKS-Element** | **Erläuterungen zum KKS-Element** |
|---|---|
| HHC00DU001 | Lastregler Kurvenverschiebung des Müllaufgabesystems |
| HLB10AS001 | Drallklappe für die Primärluftzufuhr |
| HLA31AA001 | Luftklappe zur Walze w1 |
| HLA32AA001 | Luftklappe zur Walze w2 |
| HLA33AA001 | Luftklappe zur Walze w3 |
| HLA34AA001 | Luftklappe zur Walze w4 |
| HLA35AA001 | Luftklappe zur Walze w5 |
| HLA61DF001 | Sekundärluftklappe Rückwand (Strang 2) |
| HLA62DF001 | Sekundärluftklappe Rückwand (Strang 1) |
| HLA71DF001 | Sekundärluftklappe Vorderwand |
| HNA10DQ901 | O2 Regler |
| LBA10DF001 | Lastregler Führend [t/h] |

Zum Steuern des neuronalen Netzes können die Eingabedaten einen Zustandsvektor für jeden der in Tabelle 1 gezeigten Parameter umfassen. Der Zustandsvektor umfasst mehrere Zustandsgrößen des Parameters, beispielsweise mindestens eines von einem Parameterwert, einem Gradienten zu dem Parameterwert, einer Änderung des Gradienten zu dem Parameterwert, einem Mittelwert über zwei oder mehr aufeinanderfolgende Parameterwerte, einem Mittelwert über Gradienten zu zwei oder mehr aufeinanderfolgenden Parameterwerten, einem Mittelwert über Änderungen der Gradienten zu zwei oder mehr aufeinanderfolgenden Parameterwerten, einem um eine vorgegebene Totzeit vorausgegangenen Parameterwert, einem Gradienten zu dem vorausgegangenen Parameterwert, und einer Änderung des Gradienten zu dem vorausgegangenen Parameterwert. Die Berücksichtigung vorausgegangener Parameterwerte kann mit herkömmlichen Steuermethoden nicht realisiert werden und ermöglicht eine besonders präzise und schnelle Steuerung. Der Zustandsvektor eines Parameters kann beispielsweise 21 Zustandsgrößen gemäß der Tabelle 3 enthalten:

**Tabelle 3 - Zustandsvektor für Eingabedaten des neuronalen Netzes**

| **Dim.** | **Zustandsvektorelement** | **Erläuterung** |
|---|---|---|
| 1. | Messwert | Parameterwert PW1 |
| 2. | Gradient' | Differenz zwischen PW1 und PW2 |
| 3. | Änderung Gradient" | Differenzbetrag von dem Differenzbetrag zwischen PW1 und PW2 und von dem Differenzbetrag zwischen PW2 und PW3 |
| 4. | [Messwert]-2 Messungen | Mittelwert über 2 Parameterwerte |
| 5. | [Messwert]-4 Messungen | Mittelwert über 4 Parameterwerte |
| 6. | [Messwert]-8 Messungen | Mittelwert über 8 Parameterwerte |
| 7. | [Messwert]-16 Messungen | Mittelwert über 16 Parameterwerte |
| 8. | Gradient' - 2 Messungen | Mittelwert über den Gradienten zum PW1 und den Gradienten zum PW2 |
| 9. | Gradient' - 4 Messungen | Mittelwert über den Gradienten zu PW1 bis PW4 |
| 10. | Gradient' - 8 Messungen | Mittelwert über den Gradienten zu PW1 bis PW8 |
| 11. | Änderung Gradient" - 2 Messungen | Mittelwert über die Änderung des Gradienten zum PW1 und über die Änderung des Gradienten zum PW2 |
| 12. | Änderung Gradient" - 4 Messungen | Mittelwert über die Änderung des Gradienten zum PW1 und über die Änderung des Gradienten zum PW2 und über die Änderung des Gradienten zum PW3 und über die Änderung des Gradienten zum PW4 |
| 13. | Änderung Gradient" - 8 Messungen | Mittelwert über die Änderung des Gradienten zum PW1 und über die Änderung des Gradienten zum PW2 und über die Änderung des Gradienten zum PW3 und über die Änderung des Gradienten zum PW4 und über die Änderung des Gradienten zum PW5 und über die Änderung des Gradienten zum PW6 und über die Änderung des Gradienten zum PW7 und über die Änderung des Gradienten zum PW8 |
| 14. | Totzeit 1 | PW zur Totzeit (=Intervall zwischen zwei aufeinanderfolgenden PWs) |
| 15. | Gradient Totzeit 1' | Gradient zum PW zu Totzeit 1 |
| 16. | Änderung Gradient Totzeit 1" | Änderung des Gradienten zum PW zu Totzeit 1 |
| 17. | Totzeit 3 | PW zu 3 Totzeiten (= 3 Intervalle zwischen zwei aufeinanderfolgenden PWs) |
| 18. | Gradient Totzeit 3' | Gradient zum PW zu 3 Totzeiten |
| 19. | Änderung Gradient Totzeit 3" | Änderung des Gradienten zum PW zu drei Totzeiten |
| 20. | Totzeit 5 | PW zu 5 Totzeiten (= 5 Intervalle zwischen zwei aufeinanderfolgenden PWs) |
| 21. | Gradient Totzeit 5' | Gradient zum PW zu 5 Totzeiten |

Die sechzehn Parameterwerte PW sind mit einem vorgegebenen Intervall aufeinanderfolgend. Hierbei ist zu beachten, dass die sechzehn Parameterwerte zeitlich rückwärts gezählt sind, d.h. die zeitliche Reihenfolge ist PW16, PW15, ..., PW1. In einem Beispiel, in dem das Intervall zwischen zwei aufeinanderfolgenden Parameterwerten fünf Minuten beträgt, berücksichtigt der Zustandsvektor Parameterwerte über sechzehnmal 5 Minuten, also 80 Minuten. Diese Zeit wird auch als Anlaufzeit der Anlage angesehen, da erst ab diesem Zeitpunkt (80 Minuten) alle Elemente des Zustandsvektors der Tabelle 3 vorhanden sind.

Ein weiterer Zustandsvektor des Parameters kann nach dem Prinzip des "slidingwindow" bestimmt werden, d.h. die Parameterwerte zwei bis sechzehn werden wiederverwendet als Parameterwerte eins bis fünfzehn, zusätzlich zu einer neuen Messung für den neuen sechzehnten Parameterwert. Somit kann jeweils nach Ablauf eines Zeitintervalls (z.B. 5 Minuten) ein Zustandsvektor eines Parameters für die Eingabedaten bestimmt werden.

Wenn einer der Parameter der Tabelle 1 (beispielsweise eine Messgröße ist, z.B. Druck, Temperatur, Durchflussmenge, Staudruck, Sauerstoff- oder Kohlenstoffmonoxidgehalt bzw. - Konzentration, etc.) ist, dann ist ein Parameterwert PW ein Messwert zu einem bestimmten Zeitpunkt. Wenn der Parameter eine Vorgabe für eine Steuerung oder einen Regler umfasst, dann ist der Parameterwert ein Vorgabewert zu einem bestimmten Zeitpunkt.

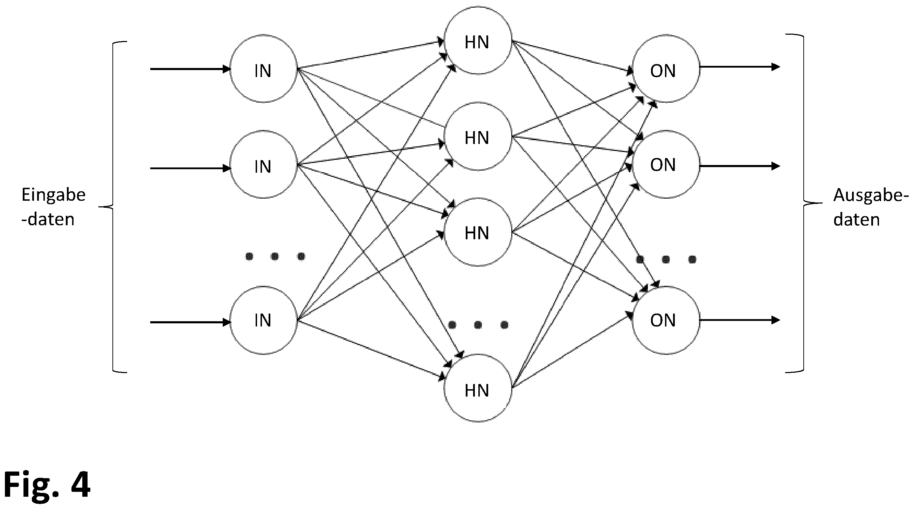

In **der** **Fig. 4** ist eine Topologie eines angelernten bzw. trainierten neuronalen Netzes dargestellt. Das angelernte neuronale Netz kann als Software-Modul in eine oben beschrieben Hardware-Architektur (beispielsweise unter Verwendung eines parallel abarbeitenden Vektorprozessors GK110 in einer CUDA Umgebung) einer Leitanlage, distributed control system, DCS, der zu steuernden Anlage integriert werden. Alternativ kann das neuronale Netz auf einem externen Rechner bzw. Controller enthalten sein. Das neuronale Netz der Fig. 4 ist ein dreischichtiges Netz mit einer Schicht von Input-Neuronen IN, einer Schicht von Hidden-Neuronen HN und einer Schicht von Output-Neuronen ON. In das angelernte neuronale Netz werden Eingabedaten eingegeben. Diese Eingabedaten können einem Teil oder allen 24 Parametern der Tabelle 1 entsprechen und umfassen für jeden Parameter einen Zustandsvektor mit Länge 21 gemäß Tabelle 3, sodass bis zu 24 x 21 Elemente an die Eingangsneuronen IN des neuronalen Netzes gegeben werden. Die Anzahl der Input-Neuronen IN kann dem Produkt aus der Anzahl der Parameter (hier maximal 24 gemäß Tabelle 1) und der Länge bzw. Dimension der Zustandsvektoren (hier maximal 21 Dimensionen gemäß Tabelle 3) der Parameter, also 504, entsprechen. Ebenso kann die Anzahl der Output-Neuronen dem Produkt aus der Anzahl der Steuerelemente (hier maximal 12 gemäß Tabelle 2) und einer Länge der Zustandsvektoren der Ausgabedaten (hier maximal 21 Dimensionen gemäß Tabelle 3), z.B. 252, entsprechen. Die Anzahl der Hidden-Neuronen HN beträgt vorzugsweise 1024.

Während des Trainierens werden Kernels in sequenzieller Abfolge aufgerufen. Hierbei können beispielsweise bis zu 1024 Blöcke mit bis zu 1024 Threads gleichzeitig gestartet werden. Die Abfolge der Aufrufe ist angepasst, um einen effizienten Programmablauf zu ermöglichen. Vorzugsweise wird mittels der Rechnerarchitektur eine parallele Matrix-Vektor-Multiplikation zum Anlernen bzw. Trainieren des neuronalen Netzes verwendet.

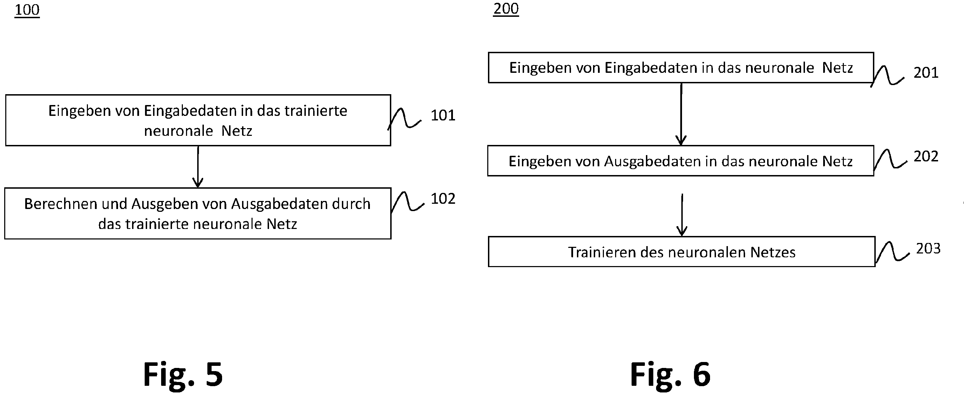

In der **Fig. 5** ist ein Ausführungsbeispiel eines Verfahrensablaufdiagramms für ein erfindungsgemäßes Verfahren 100 zum Steuern eines Kessels einer Müllverbrennungsanlage, MVA, gezeigt. Das Verfahren 100 umfasst im Schritt 101 das Eingeben von Eingabedaten in das trainierte neuronale Netz, wobei die Eingabedaten auf Parametern basieren, die zumindest einen Kesseltrommeldruck, eine Feuerraumtemperatur, einen Parameter eines Müllaufgabesystems 1, einen Parameter eines Verbrennungsluftkanalsystems HLA, einen Parameter eines Rauchgasabführungskanalsystems HNA und einen Parameter eines Frischdampfleitungssystems LBA umfassen, siehe dazu Tabelle 1. Das Verfahren 100 umfasst zudem im Schritt 102 das Berechnen und Ausgeben von Ausgabedaten durch das trainierte neuronale Netz, wobei die Ausgabedaten zumindest Steuerdaten für mindestens ein Steuerelement, das mindestens eine Luftklappe des Verbrennungsluftkanalsystems HLA enthält, umfassen, siehe dazu Tabelle 2.

In der **Fig. 6** ist ein Ausführungsbeispiel eines Verfahrensablaufdiagramms für ein erfindungsgemäßes Verfahren 200 zum Trainieren eines neuronalen Netzes gezeigt. An einer MVA werden zum Zweck des Trainierens Trainingsdaten aufgenommen, welche zu Eingabedaten (Tabelle 1 mit 3) sowie zu Ausgabedaten (Tabelle 2 mit 3) zugeordnet wurden. Da es sich bei dieser Anwendung um eine Steuerung handelt, umfassen die Eingabedaten im Wesentlichen Messungen aus der Anlage der **Fig. 2a****,** **Fig. 2b** und **Fig. 3** und die Ausgabedaten umfassen Steuerbefehle in die Anlage (Tabelle 2). Das Verfahren 200 zum Trainieren eines neuronalen Netzes umfasst die folgenden Schritte: Im Schritt 201, Eingeben von Eingabedaten in das neuronale Netz, wobei die Eingabedaten auf Parametern basieren, die zumindest einen Kesseltrommeldruck, eine Feuerraumtemperatur, einen Parameter eines Müllaufgabesystems 1, einen Parameter eines Verbrennungsluftkanalsystems HLA, einen Parameter eines Rauchgasabführungskanalsystems HNA, und einen Parameter eines Frischdampfleitungssystems LBA umfassen, siehe dazu Tabelle 1. Im Schritt 202, Eingeben von Ausgabedaten in das neuronale Netz, wobei die Ausgabedaten zumindest Steuerdaten für mindestens ein Steuerelement, das mindestens eine Luftklappe des Verbrennungsluftkanalsystems HLA enthält, umfassen, siehe dazu Tabelle 2; und im Schritt 203, Trainieren des neuronalen Netzes basierend auf den Eingabedaten und den Ausgabedaten, um das trainierte neuronale Netz zu erhalten. Beim Trainieren des neuronalen Netzes umfassen die in das Netz eingegebenen Eingabedaten bzw. Ausgabedaten jeweils Zustandsvektoren der Parameter bzw. der Steuerdaten für jedes Steuerelement, beispielsweise entsprechend der Tabelle 3. Die Zustandsvektoren umfassen vorzugsweise jeweils alle 21 der in Tabelle 3 gezeigten Zustandsgrößen.

Das System zum Trainieren des neuronalen Netzes und/oder zum Steuern einer Anlage mit dem trainierten neuronalen Netz kann einen Hostrechner, beispielsweise einen PC, und/oder Eingabemittel umfassen, wie Maus, Tastatur, Bildschirm, Touchscreen, Hauptspeicher und Festplatte. Der Hostrechner startet einzelne Kernels der Vektorprozessor - Hardware-Architektur zum Trainieren des neuronalen Netzes anhand einer fest vorgegebenen nachfolgend erläuterten Reihenfolge, um ein zeiteffizientes Trainieren zu ermöglichen.

Zudem ist eine Datenaufbereitungssoftware vorgesehen, beispielsweise in Programmiersprache C verfasst, um das physikalische Modell des Verbrennungsprozesses sowie die Steuerungseingriffe einer Müllverbrennungsanlage mit Hilfe des neuronalen Netzes trainieren zu können. Die Programme dazu lauten:

```
                          FILE_Bearbeitung-MVA-xxx.c
                                FILE_Output.c
                        FILE_Output_Bearbeitung_MVA_c
```

Die Softwareanpassung an die Hardware des Vektorprozessors (z.B. GK 110) ermöglicht, eine Matrix mit 1024 Spalten und einen Vektor mit 21 Dimensionen schnell abzuarbeiten, da nur 1024 Threads pro Block erlaubt sind, um in einem Zuge die Matrix-Vektor-Multiplikation durchführen zu können. Ebenfalls werden die Differenzen zwischen berechnetem Ausgabedaten-Vektor und einem vorgegebenen Muster-Vektor parallel in einer ähnlichen Weise berechnet.

Das Hauptprogramm mit Aufruf der Kernels lautet:
- batchnet_short_MVA_CUDA-I-624-O-234.cu (Programm mit Kernels)

Die Kernels werden wie folgt aufgerufen:
Kernel -1 (hochparallele Matrix-Vektor-Multiplikation)
   _global_void dot_1_1(float *A, float *b, int p, float *c, int Zeilen, int Spalten)
Kernel -2 (Differenz berechnetes Muster mit vorgegebenen Muster)
   _global_void delta_output(float *target, float *out2, int p, float *delta2)
Kernel -3 bis Kernel -6
   _global_ void delta_hidden (float *w2, float *delta2, int p, float *out1, float *deltal) _global_void adapt_weights_hidden_output(float *delta2, int nPatterns, float eta, float alpha, float *out1, float *delw2, float *w2)
   _global_void adapt_weights_input_hidden(float *deltal, int nPatterns, float eta, float alpha, float *out0, float *delw1, float *w1)
   _global_{_} void Sum_Squared_Error(float ErrorLevel, float *target, float *out2, float *error_sum)

Diese Kernels werden in sequenzieller Abfolge vom Hostrechner aufgerufen. Dabei werden bis zu 1024 Blöcke mit bis zu 1024 Threads gleichzeitig gestartet. Die resultierenden 1048576 Threads können mit dem Vektorprozessor nicht gleichzeitig ausgeführt werden da "nur" 30720 Threads gleichzeitig möglich sind, erfolgt eine spezielle Reihenfolge. Die 34 sequenziell abzuarbeitenden 30720 Threads benötigen eine Koordination, welche von der Hardware des Vektorprozessor übernommen wird.

Nachfolgend wird die optimal angepasste Softwarearchitektur unter CUDA-C als Beispiel für eine entsprechende Programmiertechnik dargestellt. Folgende parallele Programmierung in CUDA-C wird verwendet:
Für die parallele Matrix X Vektor - Multiplikation: 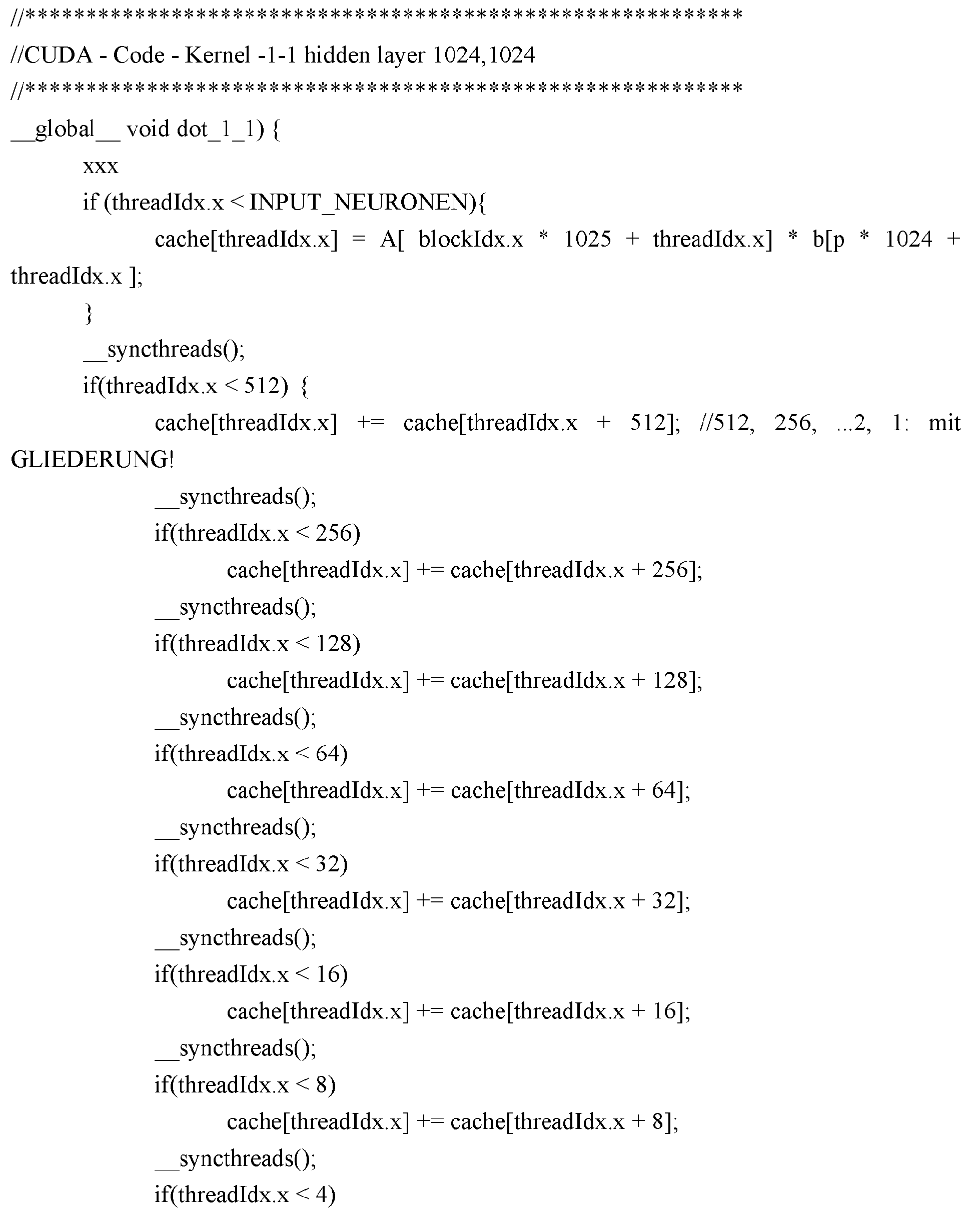 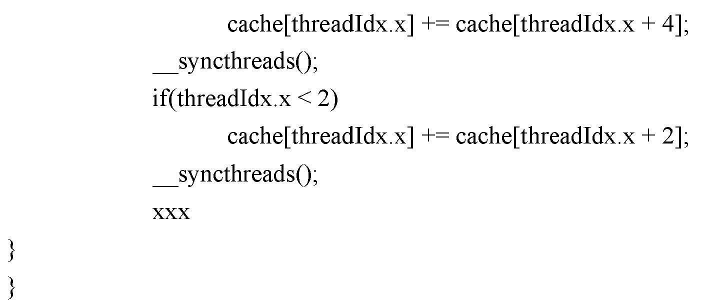
Für die Reihenfolge der Kernel-Aufrufe:

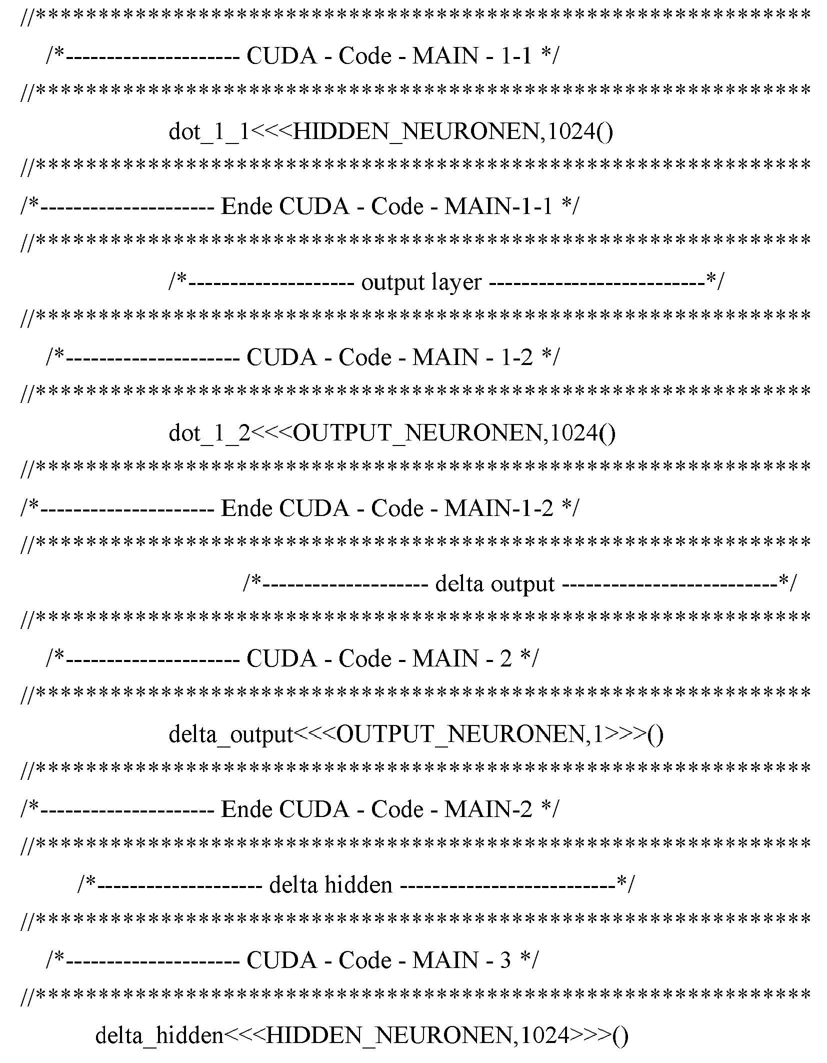

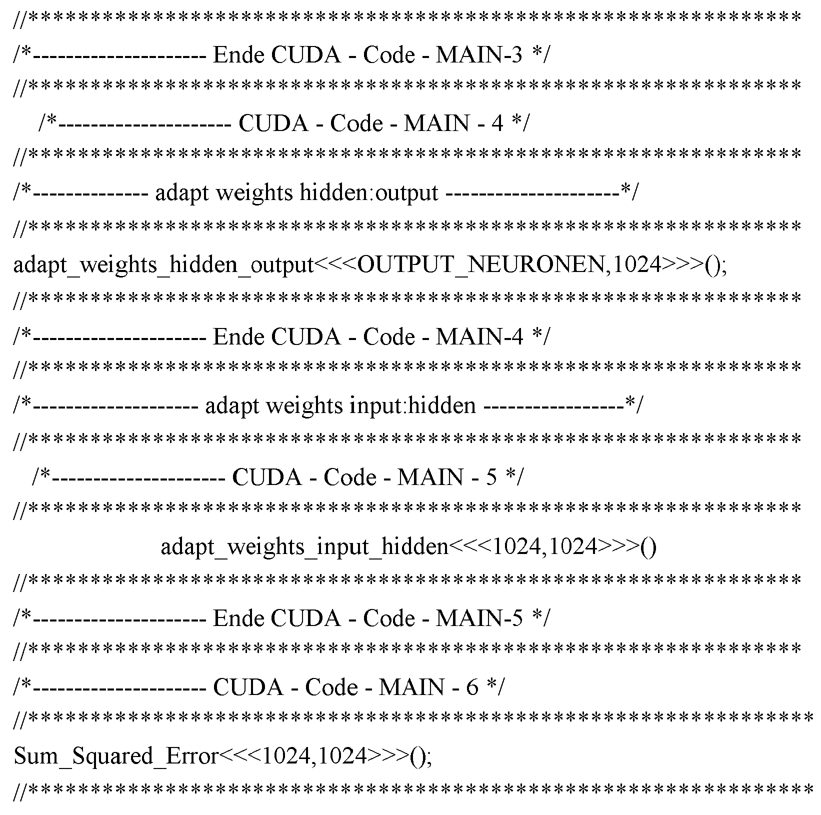

### Liste mit Beispielen

Es folgt eine Liste mit Beispielen
Beispiel 1: Erfolgreiches Erlernen (neuronales Netz) der Steuerung der Verbrennung einer MVA,
dadurch gekennzeichnet, dass folgende Messeingänge und Steuerausgänge unter Verwendung der Netzwerkstruktur (Fig. 4 Netz-Topologie des neuronalen Netzes) verwendet werden:
E: Eingang ►Messung, A: Ausgang ►Steuerung,
KKS: Kraftwerkkennzeichensystem,
x: Auswahl, /: nicht ausgewählt

| KKS | Klartext | E | A |
|---|---|---|---|
| HAD10CP001 | Trommeldruck | x | / |
| HBK10FT901 | Feuerraumtemp | x | / |
| HHC00AS001 | Aufgabe Q Soll vom Kraft-Öl % | x | / |
| HHC21CP001 | Aufgabe Druck P1 | x | / |
| HHC22CP001 | Aufgabe Druck P2 | x | / |
| HLA10CF001 | Primärluftmeng gesamt | x | / |
| HLA20CP001 | Primärluftdruck | x | / |
| HLA31CP001 | Luftdruck Walze 1 | x | / |
| HLA31FP901 | Staudruck unter Walze 1 | x | / |
| HLA32CP001 | Staudruck unter Walze 2 | x | / |
| HLA33CP001 | Staudruck unter Walze 3 | x | / |
| HLA34CP001 | Staudruck unter Walze 4 | x | / |
| HLA35CP001 | Staudruck unter Walze 5 | x | / |
| HLA50CF001 | Sekluftmenge gesamt | x | / |
| HLA50CP001 | Sekundärluftdruck | x | / |
| HLA61CF001 | Sekluftmenge Rückwand | x | / |
| HLA71CF901 | Sekluftmenge Vorderwand | x | / |
| HNA10CQ001 | O2 1 Zug | x | / |
| HNA20CQ001 | O2 Kesselende | x | / |
| HNA20CQ003 | CO Kesselende | x | / |
| HNA70CQ005 | CO Kamin | x | / |
| LBA10CP001 | FD-Druck | x | / |
| LBA10FF901 | FD-Menge | x | / |
| LBA10FT901 | FD-Temperatur | x | / |
| HHC00DU001 | Lastregler Kurvenverschiebung | / | x |
| HLB10AS001 | Drallklappe Primärluft | / | x |
| HLB10AS001 | Drallklappe Primärluft | / | x |
| HLA31AA001 | Luftklappe 1 | / | x |
| HLA32AA001 | Luftklappe 2 | / | x |
| HLA33AA001 | Luftklappe 3 | / | x |
| HLA34AA001 | Luftklappe 4 | / | x |
| HLA35AA001 | Luftklappe 5 | / | x |
| HLA61DF001 | Sekluftklappe Rückwand | / | x |
| HLA71DF001 | Sekluftklappe Vorderwand | / | x |
| HNA10DQ901 | O2 Regler | / | x |
| LBA10DF001 | Lastregler Führend [t/h] | / | x |

Die zugehörigen Anlagenschemata sind als Fig. 1 Primärluftversorgung 3 und Sekundärluftversorgung 4 festgelegt.
Beispiel 2: Datenmodell nach Beispiel 1, dadurch gekennzeichnet, dass folgender Vektor mit 21 Zustandsgrößen verwendet wird:

| | |
|---|---|
| | Messwert [ Messwert] |
| | Gradient [ Messwert]' |
| | Änderung Gradient [ Messwert]" |
| | [ Messwert]-2 Messungen |
| | [ Messwert]-4 Messungen |
| | [ Messwert]-8 Messungen |
| | [ Messwert]-16 Messungen |
| | Gradient [ Messwert]'-2 Messungen |
| | Gradient [ Messwert]'-4 Messungen |
| | Gradient [ Messwert]'-8 Messungen |
| | Änderung Gradient [ Messwert]"-2 Messungen |
| | Änderung Gradient [ Messwert]"-4 Messungen |
| | Änderung Gradient [ Messwert]"-8 Messungen |
| | Totzeit 1 [ Messwert] |
| | Gradient Totzeit 1 [ Messwert]' |
| | Änderung Gradient Totzeit 1 [ Messwert]" |
| | Totzeit 3 [ Messwert] |
| | Gradient Totzeit 3 [ Messwert]' |
| | Änderung Gradient Totzeit 3 [ Messwert]" |
| | Totzeit 5 [ Messwert] |
| | Gradient Totzeit 5 [ Messwert]' |

Beispiel 3: Topologie des neuronalen Netzes nach Beispiel 1 und 2, dadurch gekennzeichnet, dass folgende Topologie des neuronalen Netzes verwendet wird:
504 Input-Neuronen (Fig. 4 ), 1024 Hidden-Neuronen (Fig. 4) sowie 252 Output-Neuronen (Fig. 4).
Beispiel 4: Optimal angepasste Softwarearchitektur unter CUDA-C nach Beispielen 1, 2 und 3, dadurch gekennzeichnet, dass folgende parallele Programmierung in CUDA-C verwendet wird:
a) Parallele Matrix X Vektor - Multiplikation 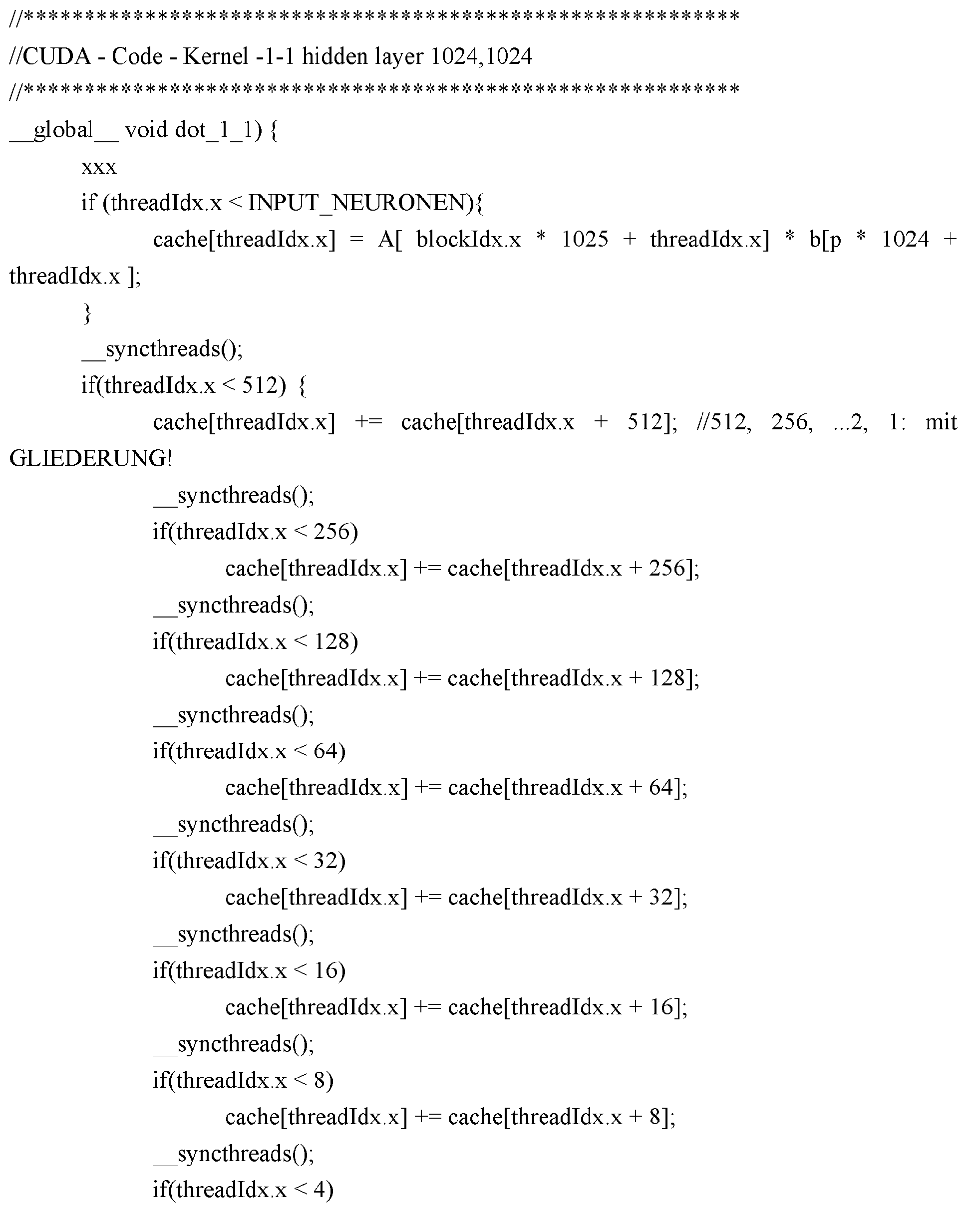 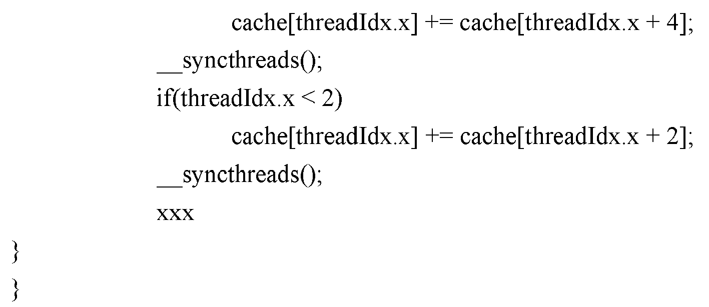
b) Reihenfolge der GK110 -Kernel-Aufrufe

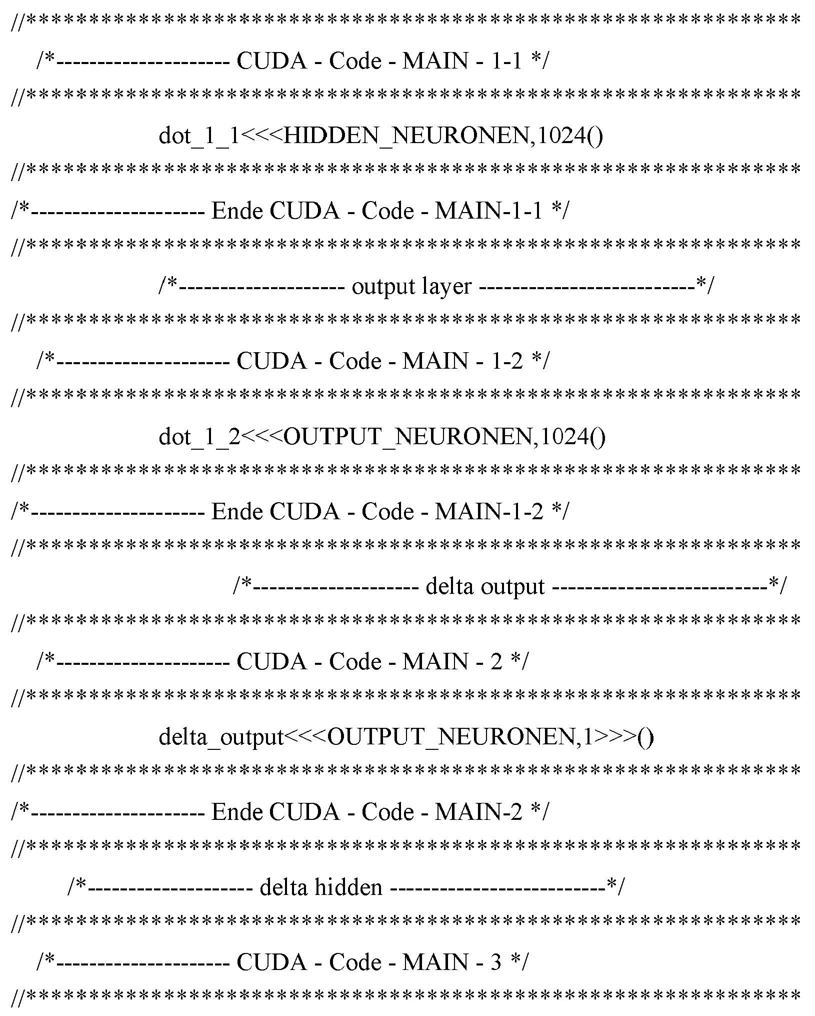

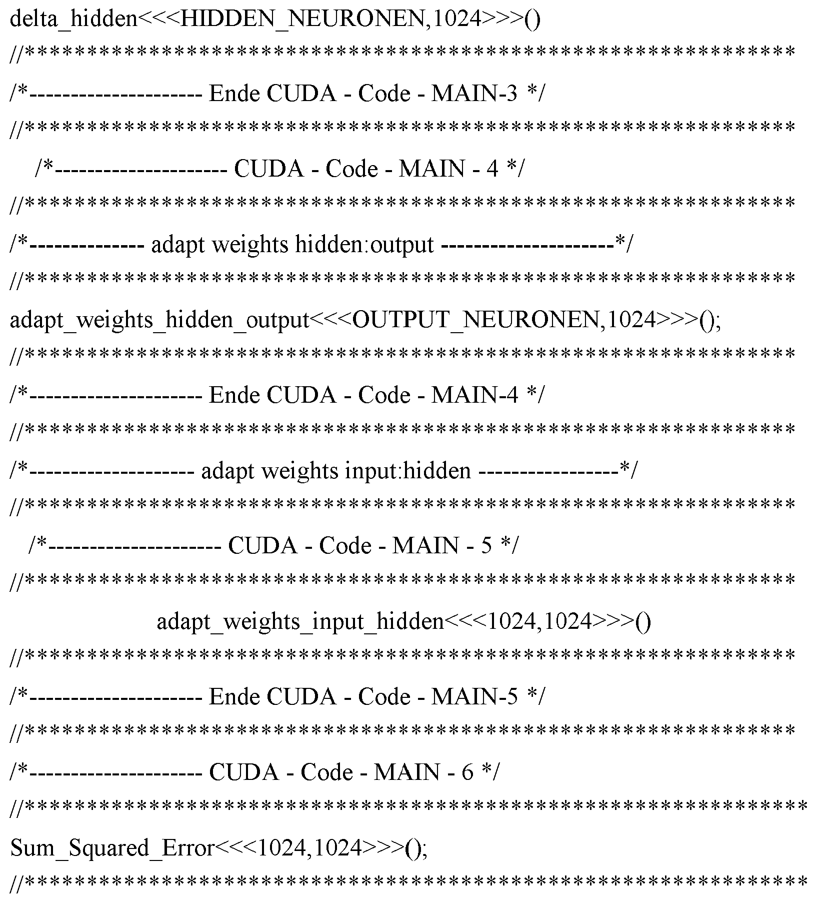

### Bezugszeichenliste:

- 1: Müllaufgabesystem
- 1a: Müll auf Rost
- 2: Feuerraum
- 3: Entschlacker
- 4: Rost
- 5: Filter, E-Filter
- 6: Saugzuggebläse
- 11: Primärluft
- 22: Sekundärluft
- 33: Rauchgas
- KH: Kesselhaus
- KT: Kesseltrommel
- K: Kamin
- RR: Rauchgasreinigungsanlage
- HLA: Verbrennungsluftkanalsystem
- HNA: Rauchgasabführungskanalsystem
- LBA: Frischdampfleitungssystem
- W1, ..., W5: Walzen
- IN: Inputneuronen
- HN: Hiddenneuronen
- ON: Outputneuronen

## Patentansprüche

1. Verfahren zum Steuern eines Kessels einer Müllverbrennungsanlage durch ein trainiertes neuronales Netz, umfassend:
- Eingeben von Eingabedaten in das trainierte neuronale Netz, wobei die Eingabedaten auf Parametern basieren, die zumindest einen Kesseltrommeldruck, eine Feuerraumtemperatur, einen Parameter eines Müllaufgabesystems (1), einen Parameter eines Verbrennungsluftkanalsystems (HLA), einen Parameter eines Rauchgasabführungskanalsystems (HNA), und einen Parameter eines Frischdampfleitungssystems (LBA) umfassen; und
- Berechnen und Ausgeben von Ausgabedaten durch das trainierte neuronale Netz, wobei die Ausgabedaten zumindest Steuerdaten für mindestens ein Steuerelement, das mindestens eine Luftklappe des Verbrennungsluftkanalsystems (HLA) enthält, umfassen.

2. Verfahren nach Anspruch 1, wobei die Ausgabedaten an eine Steuereinheit des Kessels geleitet werden, die das mindestens eine Steuerelement basierend auf den Ausgabedaten ansteuert, oder wobei die Ausgabedaten an eine Anzeigevorrichtung einer Steuereinheit des Kessels geleitet werden, um einem Bediener zum Steuern des Kessels angezeigt zu werden.

3. Verfahren nach Anspruch 1 oder 2, wobei die Eingabedaten einen Zustandsvektor für jeden Parameter umfassen und jeder Zustandsvektor mehrere Zustandsgrößen des jeweiligen Parameters umfasst, die mindestens eines von einem Parameterwert, einem Gradienten zu dem Parameterwert, einer Änderung des Gradienten zu dem Parameterwert, einem Mittelwert über zwei oder mehr aufeinanderfolgende Parameterwerte, einem Mittelwert über Gradienten zu zwei oder mehr aufeinanderfolgenden Parameterwerten, einem Mittelwert über Änderungen der Gradienten zu zwei oder mehr aufeinanderfolgenden Parameterwerten, einem um eine vorgegebene Totzeit vorausgegangenen Parameterwert, einem Gradienten zu dem vorausgegangenen Parameterwert, und einer Änderung des Gradienten zu dem vorausgegangenen Parameterwert enthalten.

4. Verfahren nach einem der vorausgehenden Ansprüche, wobei die Ausgabedaten einen Zustandsvektor mit drei Zustandsgrößen für die Steuerdaten für jedes Steuerelement umfassen, wobei die Zustandsgrößen einen ersten Steuerwert, einen Differenzbetrag zwischen dem ersten Steuerwert und einem diesen vorausgehenden zweiten Steuerwert und einen Differenzbetrag des Differenzbetrags zwischen dem ersten Steuerwert und dem diesen vorausgehenden zweiten Steuerwert und des Differenzbetrags zwischen dem zweiten Steuerwert und einem dem zweiten Steuerwert vorausgehenden dritten Steuerwert umfassen.

5. Verfahren nach einem der vorausgehenden Ansprüche, wobei die berechneten Ausgabedaten für eine quasi-kontinuierliche Ausgabe interpoliert werden.

6. Verfahren nach einem der vorausgehenden Ansprüche, wobei der mindestens eine Parameter des Müllaufgabesystems (1) einen Leistungssollwertvorgabe für eine Steuerung des Müllaufgabesystems (1) und/oder einen Druck einer Ölhydraulik des Müllaufgabesystems (1) umfassen.

7. Verfahren nach einem der vorausgehenden Ansprüche, wobei der mindestens eine Parameter des Verbrennungsluftkanalsystems (HLA) zumindest einen der folgenden Parameter umfasst: Primärluftdruck, Primärluftdurchflussmenge, Luftdurchflussmenge zu einem Rostbereich eines Rosts (4), Luftdurchflussmenge zu einer Walze (w1, ..., w5) eines Walzenrosts (4), Staudruck unter einem Rostbereich eines Rosts (4), Staudruck unter einer Walze (w1, ..., w5) eines Walzenrosts (4), Sekundärluftdruck und Sekundärluftdurchflussmenge.

8. Verfahren nach einem der vorausgehenden Ansprüche, wobei der mindestens eine Parameter des Rauchgasabführungskanalsystems (HNA) zumindest einen Messwert einer Sauerstoffkonzentration und/oder einen Messwert einer Kohlenstoffmonoxidkonzentration umfasst, und/oder wobei der mindestens eine Parameter des Frischdampfleitungssystems (LBA) zumindest einen der folgenden Parameter umfasst: Druck im Frischdampfleitungssystem (LBA), Frischdampfdurchflussmenge und Frischdampftemperatur.

9. Verfahren nach einem der vorausgehenden Ansprüche, wobei das mindestens eine Steuerelement zumindest eines der folgenden Elemente umfassen: mindestens eine Luftklappe des Verbrennungsluftkanalsystems (HLA), einen Lastregler des Müllaufgabesystems (1), und einen Sauerstoff-Regler.

10. Verfahren nach Anspruch 9, wobei die mindestens eine Luftklappe des Verbrennungsluftkanalsystems (HLA) eine Luftklappe für die Primärluftzufuhr zu einem Bereich von mehreren Bereichen eines bzw. des Rosts (4) und/oder zu einer Walze (w1, ..., w5) von mehreren Walzen eines bzw. des Walzenrosts (4) umfasst.

11. Verfahren nach einem der vorausgehenden Ansprüche, wobei die Ausgabedaten Steuerdaten für einen bzw. den Lastregler des Müllaufgabesystems (1) und/oder Steuerdaten für einen bzw. den Sauerstoff-Regler zum Regeln eines Sauerstoffgehalts in einem Feuerraum (2) umfassen.

12. Verfahren nach einem der vorausgehenden Ansprüche, wobei das neuronale Netz ein dreischichtiges Netz mit einer Schicht von Input-Neuronen, einer Schicht von Hidden-Neuronen und einer Schicht von Output-Neuronen ist.

13. Verfahren nach einem der vorausgehenden Ansprüche, wobei das Verfahren ferner folgende Schritte zum Trainieren eines neuronalen Netzes umfasst:
- Eingeben von Eingabedaten in das neuronale Netz, wobei die Eingabedaten auf Parametern basieren, die zumindest einen Kesseltrommeldruck, eine Feuerraumtemperatur, einen Parameter eines Müllaufgabesystems (1), einen Parameter eines Verbrennungsluftkanalsystems (HLA), einen Parameter eines Rauchgasabführungskanalsystems (HNA), und einen Parameter eines Frischdampfleitungssystems (LBA) umfassen;
- Eingeben von Ausgabedaten in das neuronale Netz, wobei die Ausgabedaten zumindest Steuerdaten für mindestens ein Steuerelement, das mindestens eine Luftklappe des Verbrennungsluftkanalsystems (HLA) enthält, umfassen; und
- Trainieren des neuronalen Netzes basierend auf den Eingabedaten und den Ausgabedaten, um das trainierte neuronale Netz zu erhalten.

14. Verfahren nach Anspruch 13, wobei der Schritt des Trainierens umfasst:
- Berechnen von berechneten Ausgabedaten basierend auf den Eingabedaten, und
- Vergleichen der berechneten Ausgabedaten mit den eingegebenen Ausgabedaten.

15. Verfahren nach Anspruch 13 oder 14, wobei die eingegebenen Ausgabedaten einen Zustandsvektor der Steuerdaten für jedes Steuerelement umfassen, und der Zustandsvektor der Steuerdaten für ein Steuerelement mehrere Zustandsgrößen der Steuerdaten eines Steuerelements umfasst, einschließlich mindestens eines von einem Steuerwert, einem Gradienten zu dem Steuerwert, einer Änderung des Gradienten zu dem Steuerwert, einem Mittelwert über zwei oder mehr aufeinanderfolgende Steuerwerte, einem Mittelwert über Gradienten zu zwei oder mehr aufeinanderfolgenden Steuerwerten, einem Mittelwert über Änderungen der Gradienten zu zwei oder mehr aufeinanderfolgenden Steuerwerten, einem um eine vorgegebene Totzeit vorausgegangenen Steuerwert, einem Gradienten zu dem vorausgegangenen Steuerwert, und einer Änderung des Gradienten zu dem vorausgegangenen Steuerwert.

## Claims

1. Method for controlling a boiler of a waste incineration plant by means of a trained neural network, comprising:
- inputting input data into the trained neural network, wherein the input data is based on parameters that comprise at least a boiler drum pressure, a furnace temperature, a parameter of a waste delivery system (1), a parameter of a combustion air duct system (HLA), a parameter of a flue gas discharge duct system (HNA), and a parameter of a main steam line system (LBA); and
- calculating and outputting output data by means of the trained neural network, wherein the output data comprise at least control data for at least one control element that contains at least one air valve of the combustion air duct system (HLA).

2. Method according to claim 1, wherein the output data are routed to a control unit of the boiler, which control unit controls the at least one control element on the basis of the output data, or wherein the output data are routed to a display device of a control unit of the boiler in order to be displayed to an operator for controlling the boiler.

3. Method according to claim 1 or 2, wherein the input data comprise a state vector for each parameter and each state vector comprises a plurality of state variables of the relevant parameter, which state variables contain at least one of a parameter value, a gradient to the parameter value, a change in the gradient to the parameter value, a mean value over two or more successive parameter values, a mean value over gradients to two or more successive parameter values, a mean value over changes in the gradients to two or more successive parameter values, a parameter value preceded by a predetermined dead time, a gradient to the preceded parameter value, and a change in the gradient to the preceded parameter value.

4. Method according to any of the preceding claims, wherein the output data comprise a state vector comprising three state variables for the control data for each control element, wherein the state variables comprise a first control value, a difference between the first control value and a second control value preceding the first control value, and a difference of the difference between the first control value and the second control value preceding the first control value and of the difference between the second control value and a third control value preceding the second control value.

5. Method according to any of the preceding claims, wherein the calculated output data are interpolated for a quasi-continuous output.

6. Method according to any of the preceding claims, wherein the at least one parameter of the waste delivery system (1) comprises a power setpoint value for controlling the waste delivery system (1) and/or a pressure of an oil hydraulics system of the waste delivery system (1).

7. Method according to any of the preceding claims, wherein the at least one parameter of the combustion air duct system (HLA) comprises at least one of the following parameters: primary air pressure, primary air flow rate, air flow rate to a grate region of a grate (4), air flow rate to a roller (w1, ..., w5) of a roller grate (4), dynamic pressure under a grate region of a grate (4), dynamic pressure under a roller (w1, ..., w5) of a roller grate (4), secondary air pressure and secondary air flow rate.

8. Method according to any of the preceding claims, wherein the at least one parameter of the flue gas discharge duct system (HNA) comprises at least a measured value of an oxygen concentration and/or a measured value of a carbon monoxide concentration, and/or wherein the at least one parameter of the main steam line system (LBA) comprises at least one of the following parameters: pressure in the main steam line system (LBA), main steam flow rate and main steam temperature.

9. Method according to any of the preceding claims, wherein the at least one control element comprises at least one of the following elements: at least one air valve of the combustion air duct system (HLA), a load regulator of the waste delivery system (1), and an oxygen regulator.

10. Method according to claim 9, wherein the at least one air valve of the combustion air duct system (HLA) is an air valve for the primary air supply to a region of a plurality of regions of a or the grate (4) and/or to a roller (w1, ..., w5) of a plurality of rollers of a or the roller grate (4).

11. Method according to any of the preceding claims, wherein the output data comprise control data for a or the load regulator of the waste delivery system (1) and/or control data for an or the oxygen regulator for regulating an oxygen content in a furnace (2).

12. Method according to any of the preceding claims, wherein the neural network is a three-layer network comprising a layer of input neurons, a layer of hidden neurons and a layer of output neurons.

13. Method according to any of the preceding claims, wherein the method further comprises the following steps for training a neural network:
- inputting input data into the neural network, wherein the input data is based on parameters that comprise at least a boiler drum pressure, a furnace temperature, a parameter of a waste delivery system (1), a parameter of a combustion air duct system (HLA), a parameter of a flue gas discharge duct system (HNA), and a parameter of a main steam line system (LBA);
- inputting output data into the neural network, wherein the output data comprise at least control data for at least one control element that contains at least one air valve of the combustion air duct system (HLA); and
- training the neural network on the basis of the input data and the output data to obtain the trained neural network.

14. Method according to claim 13, wherein the training step comprises:
- calculating calculated output data on the basis of the input data, and
- comparing the calculated output data with the inputted output data.

15. Method according to claim 13 or 14, wherein the inputted output data comprise a state vector of the control data for each control element, and the state vector of the control data for a control element comprises a plurality of state variables of the control data of a control element, including at least one of a control value, a gradient to the control value, a change in the gradient to the control value, a mean value over two or more successive control values, a mean value over gradients to two or more successive control values, a mean value over changes in the gradients to two or more successive control values, a control value preceded by a predetermined dead time, a gradient to the preceded control value, and a change in the gradient to the preceded control value.

## Revendications

1. Procédé destiné à commander une chaudière d'une installation d'incinération de déchets par un réseau neuronal entrainé, comportant les étapes consistant à :
- entrer des données d'entrée dans le réseau neuronal entraîné, les données d'entrée étant basées sur des paramètres comportant au moins une pression de tambour de chaudière, une température de chambre de combustion, un paramètre d'un système de décharge de déchets (1), un paramètre d'un système de conduits d'air de combustion (HLA), un paramètre d'un système de conduits d'évacuation de gaz de combustion (HNA) et un paramètre d'un système de conduites de vapeur vive (LBA) ; et
- calculer et délivrer en sortie des données de sortie par le réseau neuronal entraîné, les données de sortie comprenant au moins des données de commande pour au moins un élément de commande qui contient au moins un volet d'aération du système de conduits d'air de combustion (HLA).

2. Procédé selon la revendication 1, dans lequel les données de sortie sont acheminées jusqu'à l'unité de commande de la chaudière qui commande le au moins un élément de commande sur la base des données de sortie, ou dans lequel les données de sortie sont acheminées jusqu'à un dispositif d'affichage d'une unité de commande de la chaudière afin d'être affichées à un opérateur pour la commande de la chaudière.

3. Procédé selon la revendication 1 ou 2, dans lequel les données d'entrée comprennent un vecteur d'état pour chaque paramètre et chaque vecteur d'état comprend plusieurs grandeurs d'état du paramètre respectif, qui contiennent au moins une valeur parmi une valeur de paramètre, un gradient de la valeur de paramètre, une variation du gradient de la valeur de paramètre, une valeur moyenne de deux valeurs de paramètre successives ou plus, une valeur moyenne de gradient de deux valeurs de paramètre successives ou plus, une valeur moyenne de variations du gradient de deux valeurs de paramètre successives ou plus, une valeur de paramètre précédant un temps d'inactivité prédéfini, un gradient de la valeur de paramètre précédente, et un variation du gradient de la valeur de paramètre précédente.

4. Procédé selon l'une des revendications précédentes, dans lequel les données de sortie comprennent un vecteur d'état avec trois grandeurs d'état pour les données de commande pour chaque élément de commande, dans lequel les grandeurs d'état comprennent une première valeur de commande, une différence entre la première valeur de commande et une deuxième valeur de commande précédente, et une différence de la différence entre la première valeur de commande et cette deuxième valeur de commande précédente et de la différence entre la deuxième valeur de commande et une troisième valeur de commande précédant la deuxième valeur de commande.

5. Procédé selon l'une des revendications précédentes, dans lequel les données de sortie calculées sont interpolées pour une sortie quasi-continue.

6. Procédé selon l'une des revendications précédentes, dans lequel le au moins un paramètre du système de décharge de déchets (1) comprend une valeur de consigne de puissance pour une commande du système de décharge de déchets (1) et/ou une pression oléohydraulique du système de décharge de déchets (1).

7. Procédé selon l'une des revendications précédentes, dans lequel le au moins un paramètre du système de conduits d'air de combustion (HLA) comprend au moins l'un des paramètres suivants : pression d'air primaire, débit d'air primaire, débit d'air jusqu'à une zone de grille d'une grille (4), débit d'air jusqu'à un rouleau (w1, ..., w5) d'une grille à rouleaux (4), pression dynamique sous une zone de rouleaux d'une grille (4), pression dynamique sous un rouleau (w1, ..., w5) d'une grille à rouleaux (4), pression d'air secondaire et débit d'air secondaire.

8. Procédé selon l'une des revendications précédentes, dans lequel le au moins un paramètre du système de conduits d'évacuation de gaz de combustion (HNA) comprend au moins une valeur mesurée d'une concentration d'oxygène et/ou une valeur mesurée d'une concentration de monoxyde de carbone, et/ou dans lequel le au moins un paramètre du système de conduites de vapeur vive (LBA) comprend au moins l'un des paramètres suivants : pression dans le système de conduites de vapeur vive (LBA), débit de vapeur vive et température de vapeur vive.

9. Procédé selon l'une des revendications précédentes, dans lequel le au moins un élément de commande comprend au moins l'un des éléments suivants : au moins un volet d'aération du système de conduits d'air de combustion (HLA), un régulateur de charge du système de décharge de déchets (1) et un régulateur d'oxygène.

10. Procédé selon la revendication 9, dans lequel le au moins un volet d'aération du système de conduits d'air de combustion (HLA) comprend un volet d'aération pour l'alimentation en air primaire d'une zone parmi plusieurs zones d'une ou de la grille (4) et/ou d'un rouleau (w1, ..., w5) parmi plusieurs rouleaux d'une ou de la grille à rouleaux (4).

11. Procédé selon l'une des revendications précédentes, dans lequel les données de sortie comprennent des données de commande pour un ou le régulateur de charge du système de décharge de déchets (1) et/ou des données de commande pour un ou le régulateur d'oxygène pour réguler une teneur en oxygène dans une chambre de combustion (2).

12. Procédé selon l'une des revendications précédentes, dans lequel le réseau neuronal est un réseau à trois couches avec une couche de neurones d'entrée, une couche de neurones cachés et une couche de neurones de sortie.

13. Procédé selon l'une des revendications précédentes, dans lequel le procédé comprend en outre les étapes suivantes pour l'entraînement d'un réseau neuronal :
- entrer des données d'entrée dans le réseau neuronal entraîné, les données d'entrée étant basées sur des paramètres comportant au moins une pression de tambour de chaudière, une température de chambre de combustion, un paramètre d'un système de décharge de déchets (1), un paramètre d'un système de conduits d'air de combustion (HLA), un paramètre d'un système de conduits d'évacuation de gaz de combustion (HNA) et un paramètre d'un système de conduites de vapeur vive (LBA) ;
- entrer des données de sortie dans le réseau neuronal, les données de sortie comprenant au moins des données de commande pour au moins un élément de commande qui contient au moins un volet d'aération du système de conduits d'air de combustion (HLA) ; et
- entraîner le réseau neuronal sur la base des données d'entrée et des données de sortie afin d'obtenir le réseau neuronal entraîné.

14. Procédé selon la revendication 13, dans lequel l'étape de l'entraînement comprend de :
- calculer des données de sortie calculées sur la base des données d'entrée, et
- comparer les données de sortie calculées aux données de sortie entrées.

15. Procédé selon la revendication 13 ou 14, dans lequel les données de sortie entrées comprennent un vecteur d'état des données de commande pour chaque élément de commande, et le vecteur d'état des données de commande pour un élément de commande comprend plusieurs grandeurs d'état des données de commande d'un élément de commande, y compris au moins une valeur parmi une valeur de commande, un gradient de la valeur de commande, une variation du gradient de la valeur de commande, une valeur moyenne de deux valeurs de commande successives ou plus, une valeur moyenne de gradient de deux valeurs de commande successives ou plus, une valeur moyenne de variations du gradient de deux valeurs de commande successives ou plus, une valeur de commande précédant un temps d'inactivité prédéfini, un gradient de la valeur de commande précédente, et une variation du gradient de la valeur de commande précédente.
